# EUROPEAN PATENT APPLICATION

(11) **EP 4 650 380 A2**
(43) Date of publication of application: **19.11.2025**
(21) Application number: 25172689.9
(22) Date of filing: 25.04.2025
(51) Int. Cl.: C08G 59/18, C08G 59/40, C08G 59/44, C08G 59/62

(54) **AMINE ADDUCT**

(30) Priority: 25.04.2024 GB 202405842
(71) Applicant: Jones, Paul, Wrightington WN6 9PS (GB)
(72) Inventor: Jones, Paul, Wrightington WN6 9PS (GB)
(74) Representative: Mathys & Squire

(57) **Abstract**

The invention relates to a method of forming an epoxy resin curative, derived from a polyamine, and having exceptionally high purity with regard to contamination with said polyamine precursor. The invention also provides high purity epoxy resin curatives, epoxy resin curative compositions comprising said epoxy resin curatives, and uses of the same. In one aspect, the invention provides a method of forming an epoxy resin curative, by contacting a difunctional epoxide compound with one or more polyamine, to provide a diadduct, purifying the diadduct such that the purified diadduct comprises less than 0.1 wt. % of the one or more polyamine, as determined by GC, and using the diadduct to form a Mannich base, amide containing compound, ketimine, or aldimine, for use as an epoxy resin curative.

## Description

The invention relates to a method of forming an epoxy resin curative, derived from a polyamine, and having exceptionally high purity with regard to contamination with said polyamine precursor. The invention also provides high purity epoxy resin curatives, epoxy resin curative compositions comprising said epoxy resin curatives, and uses of the same.

### BACKGROUND OF THE INVENTION

Epoxy resins are cross-linked with a number of epoxy resin curatives or catalysed in order to homo-polymerise in a process known as 'curing'. Whilst there is a large number of epoxy resin curative agents available, amines and amine derivatives possibly offer the greatest versatility as curatives from the products available. Many commercial curing agent formulations are based on amines such as aliphatic, cyclo-aliphatic araliphatic and to a lesser extent aromatic amines or combinations thereof. These amines are generally modified in order to enhance the processing and/or performance aspects, improve the active hydrogen equivalent weight and the subsequent combining ratio with epoxy resins, or reduce their hazard rating.

Amines require substantial care when being physically handled. There are different requirements for the various amines used with differing hazard classification. Generally speaking, they are corrosive and contact with the skin or eyes results in severe burns, inhalation can result in irritation to the nose and throat and some amines carry the classification of fatal by inhalation. They are notorious for causing sensitisation inducing rashes and/or asthma type symptoms.

Several of the amines employed in the formulation of epoxy resin curatives are flammable. They pose additional risks due to their high vapour pressure and volatility. Of course, aside from their classification under the Globally Harmonized System of Classification and Labelling of Chemicals (GHS) and the handling requirements to ensure containment and prevent release or exposure, they react with numerous other chemicals. Many of the unmodified amines have limited compatibility with epoxy resins and induction periods are often required as a consequence. Additionally, when cured there can be exudation of the amine to the cured surface. Several amines react with atmospheric carbon dioxide to form solid carbamates, and on contact with atmospheric humidity or water. As a result, films can display opaque white marks referred to as "blushing" or "water spotting" as a result of surface condensation, or "blooming" when the condensate encourages the migration of water-soluble compounds to the coating surface. Either way, the surface can suffer defects and irregularities that can influence the appearance, the over-coatability, and the subsequent inter-coat adhesion.

The modification of low molecular weight amines to form superior epoxy resin curatives comes in many guises, for example, polyamides, adducts, ketimines, aldimines, and Mannich bases are all modified amines which can serve as epoxy resin curatives. However, modification does not always consume all of the amine and invariably there is residual amine contamination that can migrate from the film. In the case of aliphatic amines, this amine may offer less compatibility than the modified amine and more readily exude. In the case of Mannich Bases, the free amine level can potentially increase on storage as a result of molecular increase and re-arrangement with the generation of some phenolic character. Ideally, epoxy resin curatives would have a reduced free amine content and they would have a reduced tendency to form free amine if formulated into a Mannich Base. This in turn can reduce the hazard classification and improve cure of epoxy films.

Adduction of epoxide containing compounds with amines is another method of preparing a modified amine to reduce the above disadvantages associated with free amine. A portion of epoxide containing compounds thus is incorporated into the epoxy resin curative by reaction with the amine which can also introduce aromatic character to the adduct formed therefrom, improving the compatibility. There is always an excess of amine when generating these product types. This means that excess free amine will be present as a contaminant in the adduct which will inevitably be incorporated into the epoxy resin curative end product, for example the amido amine, polyamide, ketimine, aldimine, or Mannich base.

The reaction of amines with epoxide containing compounds can give rise to undesirable multiple adductions of multiple equivalents of the epoxide compound onto the amine. This issue is especially relevant with polyamines and will also be further exacerbated by using an excess of epoxide containing compound rather than an excess of the amine. Polyamines which have been adducted with multiple epoxide containing compounds are often persistent impurities. Additionally, polyamines adducted with multiple epoxide containing compounds will lack active amine functionality and so will not be consumed by any subsequent amine modification reactions, leading to persistent impurities in the final epoxy resin curative product.

Purification of these epoxy resin curative end products often proves very challenging for a number of reasons. Firstly, amine compounds, particularly polyamine compounds, are difficult to separate from these products as they are often 'sticky' and form stubborn mixtures which are resistant to separation by conventional methods, such as distillation or chromatography. Distillation of these types of products, even at high temperature and/or reduced pressure, does not achieve sufficient removal of free amine contaminants, even where the free amine contaminants have relatively low boiling points. This is demonstrated in the comparative examples, which describe the preparation of conventional epoxy resin curatives using polyamines. For example, comparative Example 3 describes the preparation of a conventional ketimine epoxy resin curative derived from methyl isobutyl ketone and ethylene diamine. The conventional ketimine of comparative Example 3 is distilled under reduced pressure of 0.948 bar at 120 °C, but still contains 2.4 wt.% of contamination with free ethylene diamine post purification. Similarly, vacuum distilling amido-amines contaminated with free amine, even at 250 °C, will typically result in a mixture comprising around 2 to 3 wt.% free amine, as measured by GC.

Another significant challenge with the purification of epoxy resin curatives is their temperature stability. High temperature distillation of phenolic Mannich bases will cause polymeric phenolic structures to form. Ketimines and aldimines are also relatively unstable and may be easily hydrolysed at high temperatures. Similarly, amido-amines and polyamides may also self-react at high temperatures to form undesirable side products.

There remains an unmet need for a method of preparing epoxy resin curatives of the phenolic Mannich base, amido-amine, polyamide, ketimine, and aldimine classes, which are substantially free from contamination with the low molecular weight free amines from which they are derived, as well as other impurities, and avoid the disadvantages associated therewith. The present invention relates to a method of forming an epoxy resin curative of the phenolic Mannich base, amido-amine, polyamide, ketimine, or aldimine classes, containing less than 0.1 wt. % of the free amine from which they are derived, as determined by GC. The invention also provides phenolic Mannich base, amido-amine, polyamide, ketimine, or aldimine epoxy resin curatives having a hitherto unknown level of purity with regard to free amine contamination.

### SUMMARY OF THE INVENTION

In a first aspect, the present invention provides a method of forming an epoxy resin curative, the method comprising the steps of:
a) contacting a difunctional epoxide compound with one or more polyamine, in a difunctional epoxide compound to polyamine molar ratio of 1 : 2 or more, to form a mixture comprising a diadduct of the one or more polyamine with the difunctional epoxide compound, wherein the one or more polyamine comprises at least two active amine hydrogens and has a boiling point at atmospheric pressure of 500 °C or less;
b) distilling the mixture produced in step a) under reduced pressure and/or elevated temperature to remove any remaining polyamine and provide a purified diadduct; wherein the purified diadduct comprises less than 0.1 wt. % of the one or more polyamine, as determined by GC; and
c) contacting the purified diadduct formed in step b) with one of:
   i) one or more aldehyde, and an optionally substituted phenolic compound, to form a phenolic Mannich base for use as an epoxy resin curative;
   ii) one or more fatty acids, including dimer acids and trimer acids, or an ester thereof, to form an amide containing compound comprising at least one amine group for use as an epoxy resin curative; or
   iii) one or more ketone and/or aldehyde containing compound, to form a ketimine and/or aldimine containing compound for use as an epoxy resin curative.

In a second aspect, the present invention provides an epoxy resin curative composition, comprising one or more epoxy resin curatives prepared or preparable by the method as defined herein, comprising less than 0.1 % of the one or more polyamine, as a percentage of the total mass of the one or more epoxy resin curatives of the composition prepared or preparable by said method, as determined by GC.

In a third aspect, the present invention provides an epoxy resin curative of formula (1): 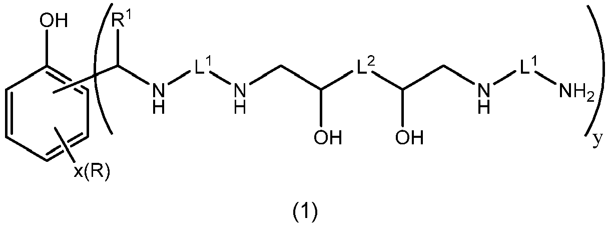 wherein:
each R is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, -C(O)OH, - C(O)OR², -C(O)NH₂, -C(O)NHR², -C(O)NR²₂, -O(CO)H, -O(CO)R², -NH(CO)H, - NH(CO)R², -NR²(CO)H, -NR²(CO)R², -SH, -SR², -SO₂H, -SO₂R², -SO₃R², -SO₃H, -SiR²₃, -NO₂, -CN, -F, -Cl, -Br, and -I;
each R' is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, -C₆ to C₁₂ aryl, and -C₃ to C₁₂ heteroaryl;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino;
each L¹ is independently selected from: a divalent hydrocarbyl group comprising 2 to 15 carbon atoms;
each L² is independently selected from: a divalent hydrocarbyl group comprising 2 to 100 carbon atoms;
x is selected from 0, 1, 2, 3, or 4;
y is selected from 1, 2, or 3;
with the proviso that x + y is from 1 to 5; and
wherein the epoxy resin curative comprises less than 0.1 wt. % of a compound defined by the formula H₂N-L³-NH₂, wherein the L³ group is the same as any one or more of the L¹ groups present in the epoxy resin curative of formula (1), as determined by GC.

In a fourth aspect, the present invention provides an epoxy resin curative of formula (2a), (2b), or (2c): 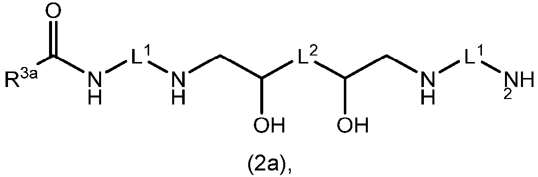 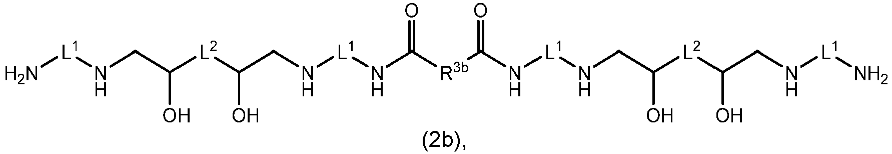 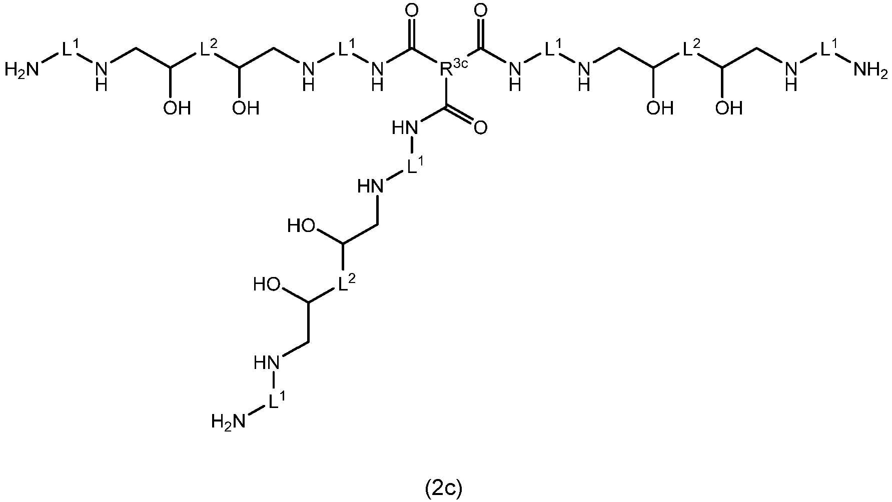 wherein:
each L¹ is independently selected from: a divalent hydrocarbyl group comprising 2 to 15 carbon atoms;
each L² is independently selected from: a divalent hydrocarbyl group comprising 2 to 100 carbon atoms;
R^{3a} is a C₇ to C₂₃ alkyl or alkenyl group;
R^{3b} is s a divalent -C₁₄ to C₄₆ hydrocarbyl- group, optionally comprising one or more alkenyl, cycloalkyl, cycloalkenyl, or aryl portion;
R^{3c} is a trivalent -C₂₁ to C₆₉ hydrocarbyl- group, optionally comprising one or more alkenyl, cycloalkyl, cycloalkenyl, or aryl portion; and
wherein the epoxy resin curative comprises less than 0.1 wt. % of a compound defined by the formula H₂N-L³-NH₂, wherein the L³ group is the same as any one or more of the L¹ groups present in the epoxy resin curative of formula (2a), (2b), or (2c) as determined by GC.

In a fifth aspect, the present invention provides an A-B-alternating copolymeric epoxy resin curative consisting of repeating units of (A) and (B), end-capped with hydrogens;
wherein repeating unit (A) is: 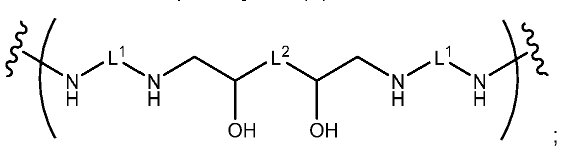
wherein each repeating unit (B) is either: 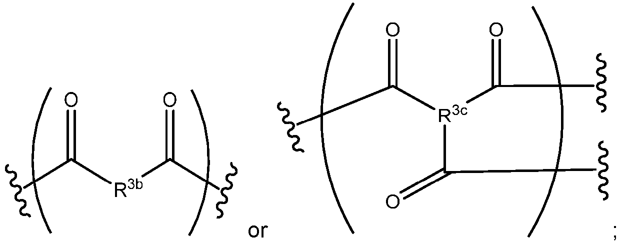 wherein:
   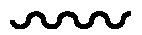 represents a point of attachment to the adjacent repeating unit, or the hydrogen end-cap;
   each L¹ is independently selected from: a divalent hydrocarbyl group comprising 2 to 15 carbon atoms;
   each L² is independently selected from: a divalent hydrocarbyl group comprising 2 to 100 carbon atoms;
   R^{3b} is s a divalent -C₁₄ to C₄₆ hydrocarbyl- group, optionally comprising one or more alkenyl, cycloalkyl, cycloalkenyl, or aryl portion;
   R^{3c} is a trivalent -C₂₁ to C₆₉ hydrocarbyl- group, optionally comprising one or more alkenyl, cycloalkyl, cycloalkenyl, or aryl portion;
   and wherein the copolymer comprises from 3 to 20 repeating units; and
   wherein the A-B-alternating copolymeric epoxy resin curative comprises less than 0.1 wt. % of a compound of formula H₂N-L³-NH₂, wherein the L³ group is the same as any one or more of the L¹ groups present in any one of the (A) repeating units, as determined by GC.

In a sixth aspect, the present invention provides an epoxy resin curative of formula (3): 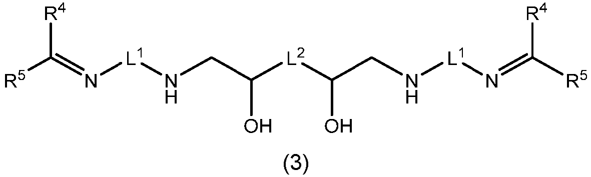 wherein:
each R⁴ is independently selected from: -H or a hydrocarbyl group comprising 1 to 50 carbon atoms;
each R⁵ is independently selected from: -H or a hydrocarbyl group comprising 1 to 50 carbon atoms;
   or where the R⁴ and R⁵ on the same carbon atom are taken together with the carbon atom to which they are attached to form a cyclic hydrocarbyl group comprising 4 to 50 carbon atoms.
each L¹ is independently selected from: a divalent hydrocarbyl group comprising 2 to 15 carbon atoms;
each L² is independently selected from: a divalent hydrocarbyl group comprising 2 to 100 carbon atoms;
wherein the epoxy resin curative comprises less than 0.1 wt. % of a compound of formula H₂N-L³-NH₂, wherein the L³ group is the same as any one or more of the L¹ groups present in the epoxy resin curative of formula (3), as determined by GC.

In a seventh aspect, the present invention provides an epoxy resin curative composition comprising one or more epoxy resin curative of formula (1), (2a), (2b), (2c), (3), or the A-B-alternating copolymeric epoxy resin curative as defined herein, and comprising less than 0.1 wt.% of a compound of formula H₂N-L³-NH₂, wherein the L³ group is the same as any one or more of the L¹ groups present in the epoxy resin curative of formula (1), (2a), (2b), (2c), (3), or the A-B-alternating copolymeric epoxy resin curative, as a percentage of the mass of said one or more epoxy resin curative of formula (1), (2a), (2b), (2c), (3), or the A-B-alternating copolymeric epoxy resin curative, as determined by GC.

In an eighth aspect, the present invention provides a method for preparing a cured epoxy resin, said method comprising:
a) contacting an epoxy resin with an epoxy resin curative as defined herein, or a composition as defined herein; and
b) forming a cured epoxy resin.

In a ninth aspect, the present invention provides a cured epoxy resin prepared, or preparable, by the method as defined herein.

In a tenth aspect, the present invention provides the use of an epoxy resin curative as defined herein, or a composition as defined herein, for causing crosslinking in an epoxy resin.

### BRIEF DESCRIPTION OF THE FIGURES

Figure 1 depicts the dry time and cure time at 25 °C of the Mannich base epoxy resin curative of comparative Example 1;
Figure 2 depicts the dry time and cure time at 5 °C of the Mannich base epoxy resin curative of comparative Example 1;
Figure 3 depicts the percentage viscosity increase at 100 °C vs time (hours) of the Mannich base epoxy resin curative of comparative Example 1;
Figure 4 depicts the viscosity (mPa•s) vs temperature (°C) of the Mannich base epoxy resin curative of Example 6;
Figure 5 depicts the dry time and cure time at 25 °C of the Mannich base epoxy resin curative of comparative Example 6;
Figure 6 depicts the dry time and cure time at 5 °C of the Mannich base epoxy resin curative of comparative Example 6;
Figure 7 depicts the percentage viscosity increase at 100 °C vs time (hours) of the Mannich base epoxy resin curative of Example 6;
Figure 8 depicts the viscosity (mPa•s) vs temperature (°C) of the amine containing epoxy resin curative of Example 7; and
Figure 9 shows the dry time and cure time at 25 °C of the epoxy resin curative solution of Example 8.

### DETAILED DESCRIPTION

### Definition of Terms

For the purposes of the present invention, the following terms as used herein shall, unless otherwise indicated, be understood to have the following meanings. Other terms that are not specifically defined below are to be understood as having their normal meaning in the art.

The term "hydrocarbyl" as used herein, refers to a monovalent, divalent, or multivalent group, comprising hydrogen and carbon atoms, such as a major proportion (i.e., more than 50 %) of hydrogen and carbon atoms, preferably consisting exclusively of hydrogen and carbon atoms. The hydrocarbyl group may be aromatic, saturated aliphatic or unsaturated aliphatic. The hydrocarbyl group may be entirely aliphatic or a combination of aliphatic and aromatic portions. In some examples, the hydrocarbyl group includes a branched aliphatic chain which is substituted by one or more aromatic groups. Examples of hydrocarbyl groups therefore include acyclic groups, as well as groups that combine one or more acyclic portions and one or more cyclic portions, which may be selected from carbocyclic, aryl and heterocyclyl groups. The hydrocarbyl group includes monovalent groups and polyvalent groups as specified and may, for example, include one or more groups selected from alkyl, alkenyl, alkynyl, carbocyclyl (e.g. cycloalkyl or cycloalkenyl), aryl and heterocyclyl. The hydrocarbyl group may contain one or more heteroatoms, such as oxygen, nitrogen, sulphur, silicon or halogen which may be part of a functional group such as an alcohol, ether, carbonyl, ester, carboxylic acid, carbonate, amide, amine, carbamate, urea, thiol, thioether, thioester, thioacid, thioamide, silane organic halide or heterocycle, the hydrocarbyl linker may contain any combination of the above insofar as it is chemically stable. Furthermore, in some embodiments, halogens may entirely replace the hydrogen component of the hydrocarbyl group (i.e. the carbon-bonded hydrogens) to give the corresponding halo-substituted analogue. A monovalent hydrocarbyl group is typically described as a group, whereas a multivalent hydrocarbyl group (such as a divalent or trivalent hydrocarbyl group) is typically described as a linker.

The term "alkyl" as used herein refers to a straight- or branched-chain alkyl moiety. Unless specifically indicated otherwise, the term "alkyl" does not include optional substituents. The term "haloalkyl" as used herein refers to an alkyl group substituted with one or more halogen atoms. The term "halogen" as used herein refers to any of fluorine, chlorine, bromine, or iodine.

The term "alkyloxy" as used herein refers to an alkyl group substituted with one or more hydroxy groups or ether groups. The term "alkylamino" as used herein refers to an alkyl group substituted with one or more primary, secondary, or tertiary amine groups.

The term "cycloalkyl" as used herein refers to a saturated aliphatic hydrocarbyl moiety containing at least one ring, wherein said ring has at least 3 ring carbon atoms. The cycloalkyl groups mentioned herein may optionally have alkyl groups attached thereto. Examples of cycloalkyl groups include groups that are monocyclic, polycyclic (e.g., bicyclic) or bridged ring system. Examples of cycloalkyl groups include cyclopropyl, cyclobutyl, cyclopentyl, cyclohexyl and the like. The term "heterocycloalkyl" as used herein refers to a cycloalkyl group wherein the ring contains at least one heteroatom selected from oxygen, nitrogen, and sulphur. Examples of heterocycloalkyl groups include morpholine, piperidine, piperazine and the like.

The term "alkenyl" as used herein refers to a straight- or branched-chain alkyl group containing at least one carbon-carbon double bond, of either E or Z configuration unless specified. The term "alkynyl" as used herein refers to a straight- or branched-chain alkyl group containing at least one carbon-carbon triple bond. Examples of alkenyl groups include ethenyl, 2-propenyl, 1-butenyl, 2-butenyl, 3-butenyl, 1-pentenyl, 2-pentenyl, 3-pentenyl, 1-hexenyl, 2-hexenyl, 3-hexenyl and the like.

The term "aryl" as used herein refers to an aromatic carbocyclic ring system. An example of an aryl group includes a group that is a monocyclic aromatic ring system or a polycyclic ring system containing two or more rings, at least one of which is aromatic. Examples of aryl groups include aryl groups that comprise from 1 to 6 exocyclic carbon atoms in addition to ring carbon atoms. Examples of aryl groups include aryl groups that are monovalent or polyvalent as appropriate. Examples of monovalent aryl groups include phenyl, benzyl, naphthyl, fluorenyl, azulenyl, indenyl, anthryl and the like. An example of a divalent aryl group is 1,4-phenylene.

The term "heteroaryl" as used herein refers to an aromatic heterocyclic ring system wherein said ring atoms include at least one ring carbon atom and at least one ring heteroatom selected from nitrogen, oxygen and sulphur. Examples of heteroaryl groups include heteroaryl groups that are a monocyclic ring system or a polycyclic (e.g. bicyclic) ring system, containing two or more rings, at least one of which is aromatic. Examples of heteroaryl groups include those that, in addition to ring carbon atoms, comprise from 1 to 6 exocyclic carbon atoms. Examples of heteroaryl groups include those that are monovalent or polyvalent as appropriate. Examples of heteroaryl groups include pyridyl, pyrimidyl, thiopheneyl, isoxazolyl and benzo[b]furanyl groups.

The term "monoamine" as used herein refers to an organic compound having one amine group. Preferably the monoamine is an organic compound having one amine group having at least one active hydrogen, i.e. a primary amine or secondary amine, also described herein as a "active amine".

The term "polyamine" as used herein refers to an organic compound having a plurality of amine groups. Preferably the polyamine is an organic compound having a plurality of amine groups having active hydrogens, i.e. one or more primary amines and/or secondary amines, also described herein as "active amine(s)". For the avoidance of doubt, in the context of the present invention a 'diamine' having two amino groups is considered to fall within the scope of a "polyamine", and a monoamine is having one amino group is not considered to fall within the scope of a "polyamine". As will be appreciated, it is possible to use only a single polyamine compound in the method of the invention, or alternatively use more than one polyamine compound in combination.

The term "active amine" refers to a primary or secondary amine, having at least one amine N-H bond. An active amine may have one or two substituents, which may contain additional amine groups in its substituents, which may be active amines or tertiary amines.

The term "fatty acid" refers to an organic compound having one or more carboxylic acid and one or more carbon chain, which is either saturated or unsaturated. One or more double or triple bonds may be present. One or more carbocyclic sections may also be present.

The term "epoxy resin" as used herein refers to an organic compound having one or more epoxide groups. In the context of the present invention the term "epoxy resin" may be used to refer to a monomeric, or polymeric organic compound, having one or more epoxide groups. An "epoxy resin" may also be referred to in some publications as an "epoxy".

The term "cured epoxy resin" as used herein refers to an organic compound produced by reaction of an "epoxy resin" with a "curing agent", for example by the processes described herein.

The term "epoxy resin curative" as used herein refers to any species that is capable of causing crosslinking between molecules of epoxy resin, which may also be referred to as hardening or curing the epoxy resin. Causing crosslinking between molecules of epoxy resin, may for example, occur by nucleophilic reaction of the epoxy resin curative with epoxide groups present on the epoxy resin such that the epoxy resin curative is incorporated into a cured epoxy resin, or for example, a catalytic process whereby the epoxy resin curative catalyses polymerisation of the epoxy resin to a cured epoxy resin. The terms, "curative", "hardener", and "cross-linking agent" may also be used to refer to an epoxy resin curative.

The term "adduct" as used herein follows the IUPAC definition of a product of a direct addition of two or more distinct molecules, resulting in a single reaction product containing all atoms of all components. The term "diadduct" refers to the product of a direct addition of two distinct molecules to a third molecule, resulting in a single reaction product containing all atoms of all three components. For example, the reaction product of an amine and an epoxide is an adduct, and the reaction product of two amine molecules with a difunctional epoxide compound is a diadduct.

The term "GC" as used herein refers to gas chromatography, which is a common type of chromatography used in analytical chemistry for separating and analysing compounds that can be vaporized without decomposition. GC is therefore particularly well suited to the detection of polyamine compounds as described herein. A GC includes a detector to detect the compound(s) of interest. Various types of detectors can be used with a GC, although a **FID** (flame ionization detector) is a particularly suitable detector for the detection of polyamine compounds as described herein.

The present invention relates to a hitherto unknown method of forming an epoxy resin curative derived from a diadduct of a polyamine with a difunctional epoxide compound, and comprising less than 0.1 wt. % of said polyamine, as determined by GC. The method involves the adduction of two equivalents of a polyamine with a difunctional epoxide containing compound. This provides an amine-epoxy diadduct. The present inventor has surprisingly found that adducting two equivalents of polyamine with one difunctional epoxide compound prevents over adduction of the amine with the epoxide containing compound and ensures that a degree of active amine functionality is maintained in the resulting diadduct. Additionally, the resulting diadduct has surprisingly been found to be much more readily separated from free amine contaminants than the epoxy resin curative end products. This can be seen from Examples 4 and 5 in which purified diadducts are prepared containing no detectable contamination with the polyamine from which they are formed. This allows for the diadduct to be purified to remove contamination with unreacted or "free" polyamine before the purified amine-epoxy diadduct may be used in the preparation of certain amine group derived epoxy resin curatives. This allows for the epoxy resin curatives to be prepared in the substantial absence of any "free" polyamine, whilst still enjoying the advantages associated with the amine groups provided by the polyamine derived diadduct. The amine-epoxy diadduct does not incur the disadvantages associated with contamination by "free" low molecular weight amines. As can be seen from Examples 6 to 9, the purified diadducts may in turn be used to prepare epoxy resin curatives which contain no detectable contamination with the polyamine from which they are derived.

In a first aspect, the invention provides a method of forming an epoxy resin curative, the method comprising the steps of:
a) contacting a difunctional epoxide compound with one or more polyamine, in a difunctional epoxide compound to polyamine molar ratio of 1 : 2 or more, to form a mixture comprising a diadduct of the one or more polyamine with the difunctional epoxide compound, wherein the one or more polyamine comprises at least two active amine hydrogens and has a boiling point at atmospheric pressure of 500 °C or less;
b) distilling the mixture produced in step a) under reduced pressure and/or elevated temperature to remove any remaining polyamine and provide a purified diadduct; wherein the purified diadduct comprises less than 0.1 wt. % of the one or more polyamine, as determined by GC; and
c) contacting the purified diadduct formed in step b) with one of:
   i) one or more aldehyde, and an optionally substituted phenolic compound, to form a phenolic Mannich base for use as an epoxy resin curative;
   ii) one or more fatty acids, including dimer acids and trimer acids, or an ester thereof, to form an amide containing compound comprising at least one amine group for use as an epoxy resin curative; or
   iii) one or more ketone and/or aldehyde containing compound, to form a ketimine and/or aldimine containing compound for use as an epoxy resin curative.

Step a) includes the reaction of the difunctional epoxide compound with one or more polyamine to form a diadduct. The difunctional epoxide compound is not particularly limited, so long as two epoxide moieties are present. Various commercially available epoxy resins are difunctional epoxide compounds, for example, bisphenol diglycidyl ethers, diglycidyl diols, 3,4-epoxycyclohexylmethyl-3',4'-epoxycyclohexane carboxylate, epoxidised derivatives of di-unsaturated fatty acids, etc, or polymers thereof. Bisphenol diglycidyl ethers, and in particular, bisphenol A diglycidyl ether are particularly suitable as the aromatic character from the bisphenol moiety may provide desirable properties to the end product, such as compatibility with epoxy resins, flexibility, toughness. It is preferable that the difunctional epoxide compound comprises at least one aromatic ring, more preferably two aromatic rings. It is preferable that the difunctional epoxide compound comprises at least 10 carbon atoms, more preferably at least 12 carbon atoms.

For example, the difunctional epoxide compound may have the following formula:

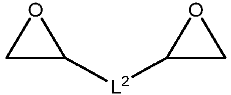

Wherein L² is a divalent hydrocarbyl group comprising 2 to 100 carbon atoms, preferably, L² is a divalent hydrocarbyl group comprising 4 to 100 carbon atoms, more preferably 5 to 100 carbon atoms, even more preferably 10 to 100 carbon atoms, even more preferably 10 to 50 carbon atoms, most preferably 10 to 25 carbon atoms.

Preferably, L² has the formula: 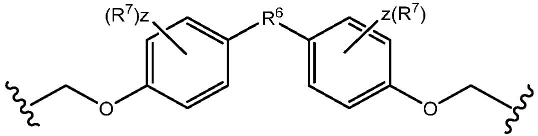 wherein:
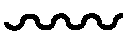 represents a point of attachment to the remainder of the molecule;
each R⁶ is independently a direct bond, a divalent group selected from: -C(O)-, -O-, -S-, - S(O)-, -S(O)₂-, or a hydrocarbyl linker comprising 1 to 50 carbon atoms;
wherein each R⁷ is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, - C(O)OH, -C(O)OR², -C(O)NH₂, -C(O)NHR², -C(O)NR²₂, -O(CO)H, -O(CO)R², -NH(CO)H,
-NH(CO)R², -NR²(CO)H, -NR²(CO)R², -SH, -SR², -SO₂H, -SO₂R², -SO₃R², -SO₃H, - SiR²₃, -NO₂, -CN, **-F,** -Cl, -Br, and -I; preferably wherein R⁷ is selected from: -Me, -OH, and -OMe;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino; and
each z is independently 0, 1, 2, 3, or 4.

Preferably, each R⁶ independently has the formula -CR⁸₂- wherein each R⁸ is independently selected from hydrogen, a -C₁ to C₁₂ alkyl group, a halogen, a -C₁ to C₁₂ haloalkyl group, a phenyl group, and a -C₁ to C₁₂ cycloalkyl group, or wherein both R⁸ groups are taken together with the carbon to which they are attached to form a -C₁ to C₁₂ cycloalkyl group; more preferably wherein each R⁸ is independently selected from: hydrogen, a -C₁ to C₆ alkyl group, a phenyl group and a halogen; and even more preferably wherein each R⁸ is methyl, in which case the difunctional epoxide compound is bisphenol A diglycidyl ether.

Difunctional epoxide compounds may self-polymerise to form polymeric forms of difunctional epoxide compounds. These self-polymerised forms of difunctional epoxide compounds, as well as combinations of monomeric and self-polymeric difunctional epoxide compounds may also serve as the difunctional epoxide compound in the present invention, as they are still compounds having two epoxide moieties. The structure of bisphenol A diglycidyl ether and a self-polymerised bisphenol A diglycidyl ether derived therefrom are shown below.

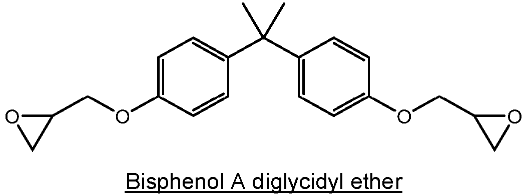

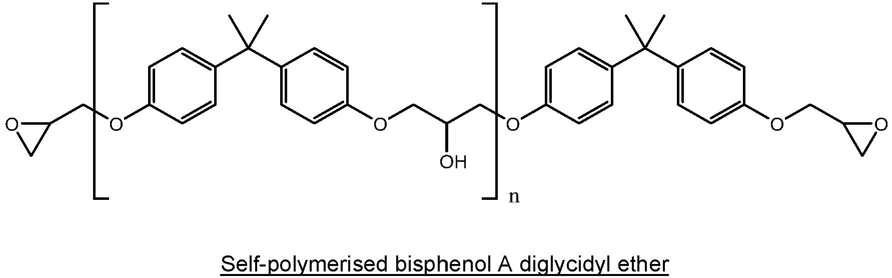

The one or more polyamine is not particularly limited, so long as two or more amine groups are present, at least two active amine hydrogens are present, and the one or more polyamine has a boiling point at atmospheric pressure of 500 °C or less. The one or more polyamine requires at least one active amine hydrogen in order to react with the difunctional epoxy compound to form the diadduct, and the resulting diadduct requires at least one active amine hydrogen to react in step c). As the first active amine hydrogen is consumed by the reaction with the difunctional epoxy compound to form the diadduct, it is necessary that the one or more polyamine comprise at least two active amine hydrogens. Preferably the one or more polyamine comprises at least 3 active amine hydrogens, more preferably at least 4 active amine hydrogens. Preferably the diadduct comprises at least 3 active amine hydrogens, more preferably at least 4 active amine hydrogens. Preferably, the one or more polyamine comprises at least one primary amine group, more preferably at least two primary amine groups, for the avoidance of doubt, where multiple polyamines are used, preferably each one of the one or more polyamines comprises at least one primary amine group, preferably at least two primary amine groups. A combination of suitable polyamines may be used, or a single species of polyamine may be used. Some examples of suitable polyamines comprising at least two primary amine groups include ethylene diamine, diethylene triamine, triethylene tetraamine, tetraethylene pentaamine, pentaethylene hexamine, a Jeffamine (RTM), cadaverine, putrescene, tris(2-aminoethyl)amine, isophorone diamine, 4,4'-diaminodicyclohexylmethane, 1,3-Bis (Aminomethyl Cyclohexane), m-Xylylenediamine, and m-phenylenediamine.

For example, a suitable polyamine may have the following structure:

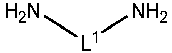

Wherein L¹ is a divalent hydrocarbyl group comprising 2 to 15 carbon atoms preferably, L¹ is a divalent hydrocarbyl group comprising 2 to 12 carbon atoms, more preferably 2 to 10 carbon atoms. Preferably, L¹ is selected from: -C₂ to C₁₅ alkyl-, -C₂ to C₁₅ alkenyl-, -C₂ to C₁₅ alkynyl-, -C₆ to C₁₀ aryl-, -C₃ to C₁₅ cycloalkyl-, and a -C₂ to C₁₅- group consisting of a combination of alkyl, cycloalkyl and/or aryl sections, and optionally comprising from 1 to 5 amine groups; preferably wherein L¹ is selected from: -C₂ to C₁₂ alkyl- optionally comprising from 1 to 5 amine groups; for example, -(CH₂)₂-, -(CH₂)₅-, -(CH₂)₆-, -(CH₂)₂-NH-(CH₂)₂-, or -(CH₂)₂-(NH-(CH₂)₂)_{2 to 4}-.

The molar ratio of the difunctional epoxide compound to polyamine should be 1 : 2 or more. This is to ensure that both of the epoxide groups on the difunctional epoxide compound react with an active amine group on the one or more polyamine. This ensures that a diadduct is formed between two equivalents of polyamine and one equivalent of the difunctional epoxide compound. The diadduct will therefore comprise at least two active amine hydrogens and over alkylated polyamine side product will not be generated. Two different polyamines may be used to form a diadduct, in which case the molar ratio is calculated as the moles of difunctional epoxide compound to the total moles of the combination of polyamines. In some cases, larger excesses of polyamine may be used, optionally the molar ratio of the difunctional epoxide compound to polyamine may be 1 : 2.1 or more, 1 : 2.2 or more, 1 : 2.3 or more, 1 : 2.4 or more, 1 : 2.5 or more, 1 : 2.6 or more, 1 : 2.7 or more, 1 : 2.8 or more, 1 : 2.9 or more, 1 : 3.0 or more, 1 : 3.5 or more, or 1 : 4.0 or more.

For example, the resulting diadduct may have the formula: 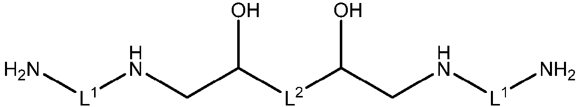 wherein L² is as defined hereinabove, or in any of the embodiment described in relation thereto; and wherein each L¹ is independently defined as hereinabove, or in any of the embodiment described in relation thereto.

The reaction of the difunctional epoxide compound with one or more polyamine may take place at room temperature, or may take place at an elevated temperature, such as at least 30 °C, preferably at least 40 °C, more preferably at least 50 °C. Optionally, the reaction may take place at from 20 to 100 °C, preferably from 30 to 90 °C, more preferably from 50 to 80 °C.

Step b) includes the purification of the diadduct formed in step a) to provide a purified diadduct. Purification involves distilling the mixture produced in step a) under reduced pressure and/or elevated temperature to remove any remaining excess polyamine. It is essential that the one or more polyamine has a boiling point at atmospheric pressure of 500 °C or less. This is so that it may be distilled out of the mixture to purify the diadduct using reduced pressure and/or elevated temperature.

Elevated temperature in this context refers to any temperature higher than 25 °C, preferably distilling the mixture produced in step a) takes place at at least 60 °C, preferably at at least 80 °C, more preferably at at least 100 °C, even more preferably at at least 120 °C, even more preferably at at least 140 °C, even more preferably at at least 160 °C, even more preferably at at least 180 °C, even more preferably at at least 200 °C, even more preferably at at least 220 °C, even more preferably at at least 240 °C, most preferably at at least 260 °C.

Reduced pressure in this context refers to any pressure lower than atmospheric pressure, preferably distilling the mixture produced in step a) takes place at a pressure of 0.50 bar or lower, preferably 0.30 bar or lower, more preferably 0.1 bar or lower, even more preferably 0.05 bar, even more preferably 0.03 bar, even more preferably 0.01 bar or lower, even more preferably 0.005 bar or lower, even more preferably 0.003 bar or lower, most preferably 0.001 bar or lower.

A relatively lower boiling point polyamine may be distilled using only one of elevated temperature and reduced pressure. A combination of elevated temperature and reduced pressure may be used to distil off polyamines with a relatively high boiling point which might not be successfully distilled using only one of elevated temperature and reduced pressure. Generally, where a higher boiling point is used, then reduced pressure is less necessary and vice versa. A polyamine having a boiling point of 500 °C can be distilled at approximately 250 °C at 0.001 bar.

Optionally, the one or more polyamine has a boiling point of 475 °C or less, preferably 450 °C or less, more preferably 425 °C or less, even more preferably 400 °C or less, even more preferably 375 °C or less, even more preferably 350 °C or less, even more preferably 325 °C or less, even more preferably 300 °C or less, even more preferably 275 °C or less, even more preferably 250 °C or less, even more preferably 225 °C or less, most preferably 200 °C or less.

The time required to distil the excess polyamine will depend on the temperature and pressure of the distillation vs the boiling point of the one or more polyamine. Optionally, distilling the mixture produced in step a) under reduced pressure and/or elevated temperature takes place for 10 minutes or more, preferably 30 minutes or more, more preferably 1 hour or more, even more preferably 2 hours or more, even more preferably 5 hours or more, even more preferably 10 hours or more, most preferably 24 hours or more.

The reaction of the difunctional epoxide compound and the one or more polyamine in step a) may take place in a solvent. In which case, the solvent may also be distilled off by the distillation in step b). A suitable solvent may, for example, be selected from toluene, xylene, ethyl acetate, pet ether, kerosine, pentane, hexane, cyclohexane, heptane, or an alcohol, such as methanol, ethanol, propanol, or benzyl alcohol. Although liquid reactants may also be used neat. Certain solvents such as toluene or xylene may aid in distillation by forming an azeotropic mixture with some polyamines.

After distillation as per step b), the purified diadduct comprises less than 0.1 wt. % of the one or more polyamine, as determined by GC, preferably as determined by GC using a flame ionisation detector. An example of a specific GC/FID is the Agilent 6850 GC/FID. Determination of a wt. % using GC is within the capabilities of the skilled person. Optionally, any of the determinations using GC as described herein, may be performed using GC with an flame ionisation detector, more preferably using an Agilent 6850 GC/FID. Optionally, the purified diadduct may comprise less than 0.05 wt. % of the one or more polyamine, preferably 0.025 wt. % of the one or more polyamine, more preferably 0.01 wt. % of the one or more polyamine, as determined by GC.

For example, the purified diadduct may comprise less than 1000 ppm of the one or more polyamine, as determined by GC, preferably 500 ppm, more preferably 250 ppm, even more preferably 100 ppm, as determined by GC. For example, the purified diadduct may comprise less than 0.1 mol. % of the one or more polyamine as compared to the diadduct, as determined by GC, preferably 0.05 mol. % of the one or more polyamine as compared to the diadduct, more preferably 0.025 mol. % of the one or more polyamine as compared to the diadduct, even more preferably 0.01 mol. % of the one or more polyamine as compared to the diadduct, as determined by GC.

As will be appreciated, where a plurality of polyamine species are used in reaction with the difunctional epoxy compound, it is the combined total mass of the polyamine species used in step a) that is less than 0.1 wt.%

Step c) involves preparation of an epoxy resin curative using the purified diadduct. As the purified diadduct comprises very low levels of, or no free polyamine, the resulting epoxy resin curative derived therefrom will also comprise very low levels of, or no free polyamine in turn.

A phenolic Mannich base for use as an epoxy resin curative may be prepared by a Mannich reaction between a phenolic compound, an aldehyde, and the purified diamine adduct. In the context of the present invention, a phenolic compound is an optionally substituted phenol, for example, phenol, guaiacol, resorcinol, cresol, hydroquinone, catechol, cardanol, and phloroglucinol; preferably phenol. The aldehyde may also be any small molecule bearing an aldehyde group, although formaldehyde or furfural are preferred.

Mannich bases are useful as epoxy resin curatives as they include amine groups which causes cross-linking in epoxy resins. Where the amine group is an active amine, i.e. primary or secondary amines, the active amine can act as a nucleophile to attack the epoxy groups of an epoxy resin such that the curing agent forms a covalent bond to the epoxy resin and is incorporated into a cured epoxy resin. Where the amine group is a tertiary amine group, the tertiary amine group may act as a homo-polymerisation catalyst in an epoxy system and as such may also cause cross-linking in epoxy resins. As would be appreciated, a Mannich base formed from a polyamine will comprise at least two amine groups on every Mannich amine substituent.

The molar ratio of the phenolic compound, an aldehyde, and the purified diamine adduct will depend on whether a mono-, di-, or tri-Mannich amine substituted Mannich base is desired. Where a mono-Mannich amine substituted Mannich base is desired the molar ratio of the optionally substituted phenolic compound to either the purified diadduct or the one or more aldehyde is 1:1. Where a di-Mannich amine substituted Mannich base is desired the molar ratio of the optionally substituted phenolic compound to either the purified diadduct or the one or more aldehyde is 1:2. Where a tri-Mannich amine substituted Mannich base is desired the molar ratio of the optionally substituted phenolic compound to either the purified diadduct or the one or more aldehyde is 1:3. Preferably the molar ratio of the optionally substituted phenolic compound to either the purified diadduct or the one or more aldehyde, is 1 : 2 or more, preferably 1 : 3 or more.

Typically, the molar ratio of the aldehyde to the purified diamine adduct will be 1:1 or with a minor excess of one reactant, for example from 2:1 to 1:2, preferably from 1.5 to 1 to 1: 1.5, more preferably from 1.1:1 to 1:1.1. The Mannich reaction may take place in a solvent or neat, and may take place under elevated temperature, such as at least 50 °C, preferably at least 60 °C, more preferably at least 80 °C.

Preferably, the phenolic Mannich base comprises at least one primary amine, preferably at least two primary amines. Preferably, the phenolic Mannich base comprises at least one primary amine on each Mannich base amine substituent, preferably at least two primary amines on each Mannich base amine substituent. Typically, the at least one primary amine groups present on the phenolic Mannich base are derived from a primary amine present on the purified adduct.

For example, the phenolic Mannich base for use as an epoxy resin curative may be a compound of formula (1) as defined hereinbelow, or in any embodiment described in relation thereto.

An amide containing compound for use as an epoxy resin curative may be formed by reacting the purified diadduct with one or more fatty acids, including dimer acids and trimer acids.

Amide containing compounds which also bear amine group(s), sometimes referred to as amido-amines are useful as epoxy resin curatives. The amine group can cause cross-linking in epoxy resins in a similar manner to a Mannich base. Amido-amines may be prepared from innocuous and biobased carboxylic acids, or esters thereof.

Fatty acids are naturally occurring organic compounds having one or more carboxylic acid and one or more carbon chain, which is either saturated or unsaturated. One or more double or triple bonds may be present. One or more carbocyclic sections may also be present. Esters of fatty acids are naturally occurring as monoglycerides, diglycerides, or triglycerides, or can be easily prepared by esterification of fatty acids with alcohols. Biodiesels are typically fatty acid esters made by the transesterification of vegetable fats and oils.

Dimer acids are dimerised fatty acids which thus contain two carboxylic acid groups, and may contain unsaturation and/or cyclisation, such as alkene, cycloalkyl, cycloalkenyl and/or aryl groups as a result of the dimerisation reaction. Dimer acids, like fatty acids, are derived from natural sources such as tall oil or vegetable oils. Dimer acids are commercially available and may be easily prepared by the skilled person. During the fatty acid dimerisation process, trimer acids are also produced. Most commercially available dimer acids therefore also comprise some degree of trimer acids. Trimer acids are trimeric fatty acids which thus contain three carboxylic acid groups, and may contain unsaturation and/or cyclisation, such as alkene, cycloalkyl, cycloalkenyl and/or aryl groups as a result of the trimerisation reaction. Monomeric fatty acid esters may also be dimerised/trimerized, and dimer/trimer acids may be easily esterified using alcohols.

A mixture of fatty acids may be used in order to give a mixture of amide products. Various fatty acids are naturally derived and may be prepared by hydrolysis of natural triglycerides, many natural sources of fatty acids will provide combinations suitable fatty acids. For example, tall oil fatty acid (TOFA) is product of tall oil, obtained as a byproduct of the kraft process of wood pulp manufacture when pulping mainly coniferous trees. TOFA comprises primarily palmitic acid, oleic acid, and/or linoleic acid.

For example, the one or more fatty acids comprises one or more of:
i) a C8 to C24 saturated or unsaturated carboxylic acid or an ester thereof, preferably a C12 to C22 saturated or unsaturated carboxylic acid or an ester thereof, more preferably a C14 to C20 saturated or unsaturated carboxylic acid or an ester thereof, for example, palmitic acid, oleic acid, and/or linoleic acid, or an ester thereof;
ii) a C16 to C48 dimer acid or an ester thereof, preferably a C24 to C44 dimer acid or an ester thereof, more preferably a C28 to C40 dimer acid or an ester thereof, for example a C36 dimer acid or an ester thereof; and/or
iii) C24 to C72 trimer acid or an ester thereof, preferably a C36 to C66 trimer acid or an ester thereof, more preferably a C32 to C60 trimer acid or an ester thereof, for example a C54 trimer acid or an ester thereof.

For example, the amide containing compound for use as an epoxy resin curative may be a compound of formula (2a), (2b), or (2c) as defined hereinbelow, or in any embodiment described in relation thereto. For example, the amide containing compound for use as an epoxy resin curative may be an A-B-alternating copolymeric epoxy resin curative as defined hereinbelow, or in any embodiment described in relation thereto.

Where a fatty acid or ester thereof has more than one carboxylic acid group, or ester group, for example, a dimer acid, or a trimer acid, or an ester thereof, the reaction will typically involve more than one equivalent of the purified diadduct to form a compound containing more than one amide group. Typically, the stoichiometric ratio of purified diadduct to fatty acid will be 1 : 1 x the number of carboxylic caid groups or ester groups. However, a 1:1 molar ratio of purified diadduct and fatty acid may also be used with a fatty acids or esters thereof having more than one carboxylic acid or ester group in order to synthesise a polyamide, which provides an A-B-alternating copolymeric epoxy resin curative, made up of alternating repeating units derived from the purified diadduct and from the dimer acid/trimer acid. The presence of trimer acid residues will cause branching in the polymer. The chain length of the polymer, and whether a polymeric or non-polymeric compound is desired can be easily controlled by reaction conditions such as the molar ratio and the dilution, which would be within the capabilities of the skilled person. Preferably, the polymer is terminated with purified diadduct repeating units at each terminus, such that multiple amine groups are available to cause crosslinking.

The reaction between the fatty acid and the purified diadduct may take place at elevated temperature, such as 50 °C or more, preferably 75 °C or more, more preferably 100 °C or more, more preferably 125 °C or more, more preferably 150 °C or more, most preferably 175 °C or more. The reaction between the fatty acid and the purified diadduct may proceed by heating with oxalic acid; by the use of amide coupling agents such as, HATU, HBTU, PyBOP, N,N'-Dicyclohexylcarbodiimide, carbonyldiimidazole; via halogenation of the carboxylic acid group to an acid halide, for example, using thionyl chloride, thionyl bromide, oxalyl chloride, phosphorus tribromide or phosphorus pentachloride; or via formation of an acid anhydride or carbamate. Various other methods of amidation are also known in the art, for example, M. M. Joullié and K. M. Lassen, Evolution of amide bond formation, Arkivoc., 2010, (viii), 189-250. Similarly, in the case of an ester of a fatty acid, the ester group may be reacted with the purified diadduct at elevated temperature, such as, 50 °C or more, preferably 75 °C or more, more preferably 100 °C or more, more preferably 125 °C or more, more preferably 150 °C or more, most preferably 175 °C or more, and preferably in the presence of a Lewis acid catalyst.

A ketimine and/or aldimine containing compound for use as an epoxy resin curative may be prepared by reaction of the purified diadduct with one or more ketone and/or aldehyde containing compound.

A "ketimine" refers to an imine formed from the reaction of an amine and a ketone, thus a ketimine is an imine wherein the sp² carbon atom is not substituted with hydrogen and is instead bonded to two other carbon atoms. For the avoidance of doubt, "ketimine" is not to be confused with "ketamine" which generally refers to 2-(2-Chlorophenyl)-2-(methylamino)cyclohexanone.

An "aldimine" refers to an imine formed from the reaction of an amine and an aldehyde, thus an aldimine is an imine wherein the sp² carbon atom is bonded to at least one hydrogen and either one other carbon or a second hydrogen. For the avoidance of doubt, formaldehyde is considered to be an aldehyde containing compound, and thus an aldimine may include a compound where the imine carbon is substituted with two hydrogens.

A ketimine and/or aldimine containing compound is desirable for use as an epoxy resin curative as they provide 'blocked amines' which require atmospheric moisture to hydrolyse the ketimine and/or aldimine groups back to the amine and ketone and/or aldehyde compounds from which they are derived. These blocked amine based epoxy resin curatives are especially useful for formulating long pot-life high solids systems or used to extend the pot life of high-solids, two-pack epoxy coatings.

Typically, each of the primary amine groups of the purified diadduct will be reacted with a ketone and/or an aldehyde. A mixture of ketone containing compounds, aldehyde containing compounds, or ketone containing compounds and aldehyde containing compounds may be used. The ketone and/or an aldehyde will also usually be used in excess. The molar ratio of the total ketone containing compounds and/or aldehyde containing compounds to purified diadduct will therefore typically be at least 1 : (1 x number of primary amine groups in the purified diadduct. Typically, 2 primary amine groups are present in the purified diadduct and thus the molar ratio of the total ketone containing compounds and/or aldehyde containing compounds to purified diadduct will at least 2:1, preferably at least 3:1, more preferably at least 4:1. The reaction of the ketone and/or aldehyde containing compound with the purified diadduct may take place at elevated temperature, such as 50 °C or more, preferably 75 °C or more, more preferably 100 °C or more, more preferably 120 °C or more, more preferably 140 °C or more, most preferably 160 °C or more. The reaction may include distillation of excess ketone and/or aldehyde containing compound and/or water produced in the reaction, which may include the use of reduced pressure. Removal of water produced by the reaction is within the capabilities of the skilled person.

The scope of ketone and/or aldehyde containing compounds useful in the present invention is not particularly limited, although it is preferable that a low molecular weight ketone and/or aldehyde containing compound is used, as the low molecular weight ketone and/or aldehyde containing compound which is regenerated by hydrolysis of the ketimine and/or aldimine containing compound derived therefrom will more easily evaporate once the curative is used.

For example, the ketone or aldehyde containing compound may be a C₂ to C₁₅ alkyl or C₃ to C₁₅ cycloalkyl group substituted with a carbonyl group; and optionally including one or more aromatic sections. Suitable examples include acetaldehyde, isobutyraldehyde, furfural, acetone, phenyl methyl ketone, or methyl isobutyl ketone, preferably isobutyraldehyde or methyl isobutyl ketone. As would be appreciated, where the carbonyl group is substituted on a terminal carbon, this provides an aldehyde group, and where the carbonyl group is substituted on an internal carbon, this provides a ketone group. As would be appreciated, a C₂ alkyl group has no internal carbon and may only be an aldehyde and not a ketone.

For example, the ketimine and/or aldimine containing compound for use as an epoxy resin curative may be a compound of formula (3) as defined hereinbelow, or in any embodiment described in relation thereto.

In a second aspect, the present invention provides an epoxy resin curative composition, comprising one or more epoxy resin curatives prepared or preparable by the method as defined herein, comprising less than 0.1 % of the one or more polyamine, as a percentage of the total mass of the one or more epoxy resin curatives of the composition prepared or preparable by said method, as determined by GC. Optionally, the epoxy resin curative composition may comprise less than 0.05 wt. % of the one or more polyamine, preferably 0.025 wt. % of the one or more polyamine, more preferably 0.01 wt. % of the one or more polyamine, as a percentage of the mass of the one or more compound prepared or preparable by the methods as defined herein, as determined by GC.

The epoxy resin curative composition may comprise less than 0.1 mol. % of the one or more polyamine as compared to the compound prepared or preparable by the methods as defined herein, as determined by GC, preferably 0.05 mol. % of the one or more polyamine as compared to the compound prepared or preparable by the methods as defined herein, as determined by GC, more preferably 0.025 mol. % of the one or more polyamine as compared to the compound prepared or preparable by the methods as defined herein, as determined by GC, even more preferably 0.01 mol. % of the one or more polyamine as compared to the compound prepared or preparable by the methods as defined herein, as determined by GC.

Any suitable organic solvent may be used as a solvent or diluent in a resin composition of the present invention, for example MeCN, benzene, methanol, ethanol, IPA, butanol, chloroform, DCM, diethyl ether, DMF, dioxane, ethyl acetate, petroleum ether, kerosine, pentane, hexane, heptane, MTBE, NMP, THF, toluene, xylene and mixtures thereof. Toluene and benzyl alcohol are particularly suitable solvents or diluents. As would be appreciated, methods of forming and handling a resin composition from a given compound would be known by the skilled person. Optionally, a resin composition containing a ketimine and/or aldimine containing compound may be diluted with the corresponding ketone and/or aldehyde containing compound, from which it was derived.

In a third aspect, the present invention provides an epoxy resin curative of formula (1): 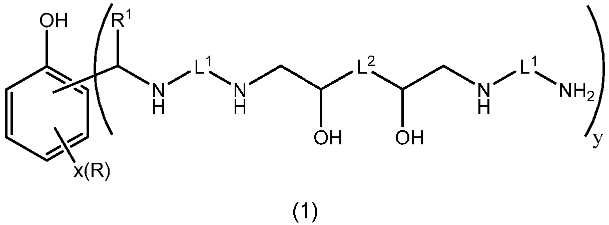 wherein:
each R is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, -C(O)OH, - C(O)OR², -C(O)NH₂, -C(O)NHR², -C(O)NR²₂, -O(CO)H, -O(CO)R², -NH(CO)H, - NH(CO)R², -NR²(CO)H, -NR²(CO)R², -SH, -SR², -SO₂H, -SO₂R², -SO₃R², -SO₃H, -SiR²₃, -NO₂, -CN, -F, -Cl, -Br, and -I;
each R' is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, -C₆ to C₁₂ aryl, and -C₃ to C₁₂ heteroaryl;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino;
each L¹ is independently selected from: a divalent hydrocarbyl group comprising 2 to 15 carbon atoms;
each L² is independently selected from: a divalent hydrocarbyl group comprising 2 to 100 carbon atoms;
x is selected from 0, 1, 2, 3, or 4;
y is selected from 1, 2, or 3;
with the proviso that x + y is from 1 to 5; and
wherein the epoxy resin curative comprises less than 0.1 wt. % of a compound defined by the formula H₂N-L³-NH₂, wherein the L³ group is the same as any one or more of the L¹ groups present in the epoxy resin curative of formula (1), as determined by GC.

The epoxy resin curative of formula (1) is an example of a Mannich base, which may be prepared from an optionally substituted phenolic compound, an aldehyde, and a purified diadduct prepared as defined hereinabove, in the case of the epoxy resin curative of formula (1), the purified diadduct prepared as defined hereinabove has the following structure: 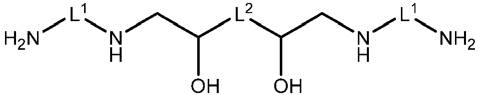 wherein L¹ and L² are as defined hereinabove, or in any embodiment described in relation thereto.

The purified diadduct combined with the aldehyde provides the Mannich amine substituent of the Mannich base, this is the moiety shown in brackets in formula (1). The number of Mannich amine substituents is denoted by y, which may be 1, 2, or 3 to provide a mono-, di-, or tri-Mannich amine substituted Mannich base. Preferably, y is 2 or 3, most preferably 3. Preferably, the Mannich amine substituents (shown in brackets in formula (1)) are substituted at the 2-, 4-, and/or -6 position relative to the phenolic - OH. Nevertheless, preferred substitution patterns will depend on the substitution present on the phenolic compound from which the Mannich base is derived.

The R¹ group is derived from the aldehyde used in the Mannich reaction. Optionally, each R¹ group is independently selected from: -H, C₁ to C₁₀ alkyl, C₆ to C₁₂ aryl, and C₃ to C₁₂ heteroaryl. In the case that formaldehyde is used in the Mannich reaction, R¹ will be hydrogen. In the case that furfural is used in the Mannich reaction, R¹ will be furan. In a preferred embodiment, the R¹ group is furan. Furfural is an inexpensive, renewable and naturally occurring feedstock derived from the dehydration of sugars, and occurs in a variety of agricultural by-products, including corncobs, oats, wheat bran, and sawdust. The use of furfural in preparation of compounds of the present invention therefore provides the advantage of introducing a degree of bio-based carbon content and utilising renewable feedstocks.

Each R¹ group is selected independently and may be either the same or different in the case of multiple Mannich amine groups. In preferred embodiments, all R¹ groups are the same. Different R¹ groups may be provided by subsequent Mannich reactions using different aldehydes.

The R group represents the substituent which may optionally be present on the phenolic compound from which the epoxy resin curative of formula (1) is derived. The number of r groups is denoted by x, which may be 0, 1, 2, 3, or 4. In the case that the phenolic compound from which the Mannich base is derived is unsubstituted, i.e. is phenol, the x will be 0. As would be appreciated, a phenol has 5 ring positions available for substitution with Mannich amine substituents or R groups, therefore x + y must be less than 5, and as at least one Mannich amine substituent is required in a Mannich base, x + y must be at least 1. Therefore x + y must be from 1 to 5.

Optionally, each R is independently selected from: -C₁ to C₂₀ alkyl, -C₁ to C₂₀ haloalkyl, - C₃ to C₂₀ cycloalkyl, -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², -NO₂, -CN, -F, -Cl, -Br, and -I; and each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkoxy, and -C₁ to C₂₀ alkylamino; preferably, each R is independently selected from: -C₁ to C₂₀ alkyl, -C₂ to C₂₀ alkenyl, -C₂ to C₂₀ alkynyl, -C₁ to C₂₀ alkyloxy, -C₁ to C₂₀ alkylamino, -OH, -OR², - NH₂, -NHR², -NR²₂, and -C(O)OH; and each R² is independently selected from: -C₁ to C₂₀ alkyl, -C₂ to C₂₀ alkenyl, -C₂ to C₂₀ alkynyl, -C₁ to C₂₀ alkoxy, and -C₁ to C₂₀ alkylamino.

Optionally each R is independently selected from: C₁ to C₁₀ alkyl, C₃ to C₁₀ cycloalkyl, C₂ to C₁₀ alkenyl, C₂ to C₁₀ alkynyl, C₁ to C₁₀ alkyloxy, C₁ to C₁₀ alkylamino, -OH, -OR², - NH₂, -NHR², -NR²₂, -CN, NO₂, -F, -Cl, -Br, and -I; and wherein each R² is independently selected from: C₁ to C₁₀ alkyl, C₃ to C₁₀ cycloalkyl, C₂ to C₁₀ alkenyl, C₂ to C₁₀ alkynyl, C₁ to C₁₀ alkoxy, and C₁ to C₁₀ alkylamino; preferably wherein R is selected from: -Me, -OH, and -OMe.

The L¹ group is derived from the polyamine which is used in preparation of the diadduct which is used in preparation of the epoxy resin curative of formula (1). The polyamine used in preparation of the epoxy resin curative of formula (1) will have the formula H₂N-L¹-NH₂. L¹ must be a relatively small group, such that H₂N-L¹-NH₂ will have a boiling point of no more than 500 °C, i.e. no more than 15 carbon atoms. L¹ may be derived from any of the polyamines described hereinabove as useful in the present invention, e.g. in the case of ethylene diamine, L¹ is -CH₂CH₂-; and in the case of m-phenylenediamine L¹ is a 1,3-phenylene group. Each L¹ may be the same or different, depending on whether a mixture of polyamines and or purified diadducts were used to prepare the epoxy resin curative of formula (1).

For example, L¹ may be selected from: a divalent hydrocarbyl group comprising 2 to 12 carbon atoms, preferably 2 to 10 carbon atoms. For example, L¹ may be selected from: - C₂ to C₁₅ alkyl-, -C₂ to C₁₅ alkenyl-, -C₂ to C₁₅ alkynyl-, -C₆ to C₁₀ aryl-, -C₃ to C₁₅ cycloalkyl-, and a -C₂ to C₁₅- group consisting of a combination of alkyl, cycloalkyl and/or aryl sections; and optionally comprising from 1 to 5 amine groups; preferably wherein L¹ is selected from: -C₂ to C₁₂ alkyl- optionally comprising from 1 to 5 amine groups; for example, -(CH₂)₂-, -(CH₂)₅-, -(CH₂)₆-, -(CH₂)₂-NH-(CH₂)₂-, or -(CH₂)₂-(NH-(CH₂)₂)_{2 to 4}-. For example, L¹ may also be derived from a JEFFAMINE (RTM) and may have a structure such as -(CH(CH₃)-CH₂-O)_{1 to 3}-CH(CH₃)-.

The L² group is derived from the difunctional epoxy compound which is used in preparation of the diadduct which is used in preparation of the epoxy resin curative of formula (1). The difunctional epoxy compound used in preparation of the epoxy resin curative of formula (1) will have the formula (CH₂OCH)-L²-(CH₂OCH), wherein the (CH₂OCH)- represents an epoxide group. The nature of L² is not particularly limited and may be polymeric. L² may be derived from any of the difunctional epoxide containing compounds described hereinabove as useful in the present invention, e.g. in the case of bisphenol A diglycidyl ether, L² will have the structure -CH₂-O-C₆H₆-C(CH₃)₂-C₆H₆-O-CH₂-. Each L² may be the same or different, depending on whether a mixture of purified diadducts was used to prepare the epoxy resin curative of formula (1).

For example, L² may be independently selected from: a divalent hydrocarbyl group comprising 4 to 100 carbon atoms, preferably 5 to 100 carbon atoms, more preferably 10 to 100 carbon atoms, even more preferably 10 to 50 carbon atoms, most preferably 10 to 25 carbon atoms.

For example, L² may have the formula: 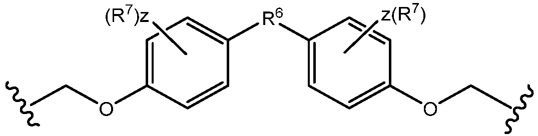 wherein:
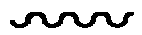 represents a point of attachment to the remainder of the molecule;
each R⁶ is independently a direct bond, a divalent group selected from: -C(O)-, -O-, -S-, - S(O)-, -S(O)₂-, or a hydrocarbyl linker comprising 1 to 50 carbon atoms;
wherein each R⁷ is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, - C(O)OH, -C(O)OR², -C(O)NH₂, -C(O)NHR², -C(O)NR²₂, -O(CO)H, -O(CO)R², -NH(CO)H,
-NH(CO)R², -NR²(CO)H, -NR²(CO)R², -SH, -SR², -SO₂H, -SO₂R², -SO₃R², -SO₃H, - SiR²₃, -NO₂, -CN, **-F,** -Cl, -Br, and -I; preferably wherein R⁷ is selected from: -Me, -OH, and -OMe;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino; and
each z is independently 0, 1, 2, 3, or 4, preferably 0.

Preferably each R⁶ independently has the formula -CR⁸₂- wherein each R⁸ is independently selected from hydrogen, a -C₁ to C₁₂ alkyl group, a halogen, a -C₁ to C₁₂ haloalkyl group, a phenyl group, and a -C₁ to C₁₂ cycloalkyl group, or wherein both R⁸ groups are taken together with the carbon to which they are attached to form a -C₁ to C₁₂ cycloalkyl group; more preferably each R⁸ is independently selected from: hydrogen, a - C₁ to C₆ alkyl group, a phenyl group and a halogen; even more preferably each R⁸ is methyl, in which case, the difunctional epoxide compound used in preparation of the epoxy resin curative of formula (1) is bisphenol A diglycidyl ether.

The epoxy resin curative of formula (1), (2a), (2b), (2c), (3), or the A-B-alternating copolymeric epoxy resin curative as defined herein comprises less than 0.1 wt. % of a compound defined by the formula H₂N-L³-NH₂, wherein the L³ group is the same as any one or more of the L¹ groups present in the epoxy resin curative of formula (1), (2a), (2b), (2c), (3), or the A-B-alternating copolymeric epoxy resin curative as determined by GC. The compound defined by the formula H₂N-L³-NH₂ is therefore the same as the one or more polyamine used to prepare to diadduct used to prepare the epoxy resin curative of formula (1), (2a), (2b), (2c), (3), or the A-B-alternating copolymeric epoxy resin curative. Optionally, the epoxy resin curative of formula (1), (2a), (2b), (2c), (3), or the A-B-alternating copolymeric epoxy resin curative as defined herein may comprise less than 0.05 wt. % of H₂N-L³-NH₂, preferably 0.025 wt. % of H₂N-L³-NH₂, more preferably 0.01 wt. % of H₂N-L³-NH₂, as determined by GC.

For example, the epoxy resin curative of formula (1), (2a), (2b), (2c), (3), or the A-B-alternating copolymeric epoxy resin curative as defined herein may comprise less 1000 ppm of H₂N-L³-NH₂, as determined by GC, preferably 500 ppm, more preferably 250 ppm, even more preferably 100 ppm, as determined by GC. For example, the epoxy resin curative of formula (1), (2a), (2b), (2c), (3), or the A-B-alternating copolymeric epoxy resin curative as defined herein may comprise less than 0.1 mol. % of H₂N-L³-NH₂ as compared to the epoxy resin curative of formula (1), (2a), (2b), (2c), (3), or the A-B-alternating copolymeric epoxy resin curative, as determined by GC, preferably 0.05 mol. % of H₂N-L³-NH₂ as compared to the epoxy resin curative of formula (1), (2a), (2b), (2c), (3), or the A-B-alternating copolymeric epoxy resin curative as defined herein, as determined by GC, more preferably 0.025 mol. % of H₂N-L³-NH₂ as compared to the epoxy resin curative of formula (1), (2a), (2b), (2c), (3), or the A-B-alternating copolymeric epoxy resin curative as defined herein, as determined by GC, even more preferably 0.01 mol. % of H₂N-L³-NH₂ as compared to the epoxy resin curative of formula (1), (2a), (2b), (2c), (3), or the A-B-alternating copolymeric epoxy resin curative as defined herein, as determined by GC.

In a fourth aspect, the present invention provides an epoxy resin curative of formula (2a), (2b), or (2c): 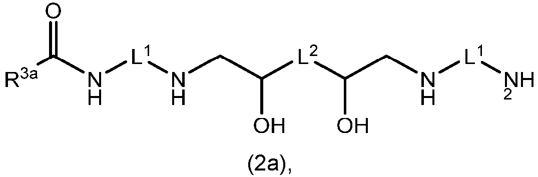 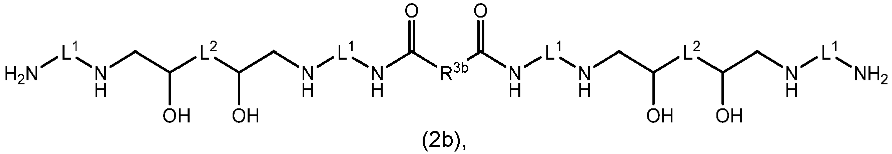 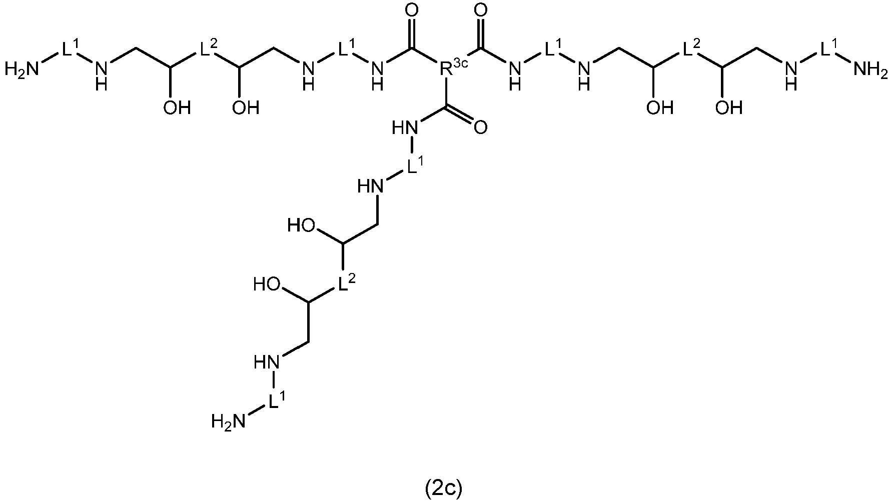 wherein:
each L¹ is independently selected from: a divalent hydrocarbyl group comprising 2 to 15 carbon atoms;
each L² is independently selected from: a divalent hydrocarbyl group comprising 2 to 100 carbon atoms;
R^{3a} is a C₇ to C₂₃ alkyl or alkenyl group;
R^{3b} is s a divalent -C₁₄ to C₄₆ hydrocarbyl- group, optionally comprising one or more alkenyl, cycloalkyl, cycloalkenyl, or aryl portion;
R^{3c} is a trivalent -C₂₁ to C₆₉ hydrocarbyl- group, optionally comprising one or more alkenyl, cycloalkyl, cycloalkenyl, or aryl portion; and
and wherein the epoxy resin curative comprises less than 0.1 wt. % of a compound defined by the formula H₂N-L³-NH₂, wherein the L³ group is the same as any one or more of the L¹ groups present in the epoxy resin curative of formula (2a), (2b), or (2c) as determined by GC.

The epoxy resin curative of formula (2a), (2b), or (2c) are examples of amide containing compounds which may be prepared from one or more fatty acids, including dimer acids and trimer acids and a purified diadduct prepared as defined hereinabove, in the case of the epoxy resin curative of formula (2a), (2b), or (2c), the purified diadduct prepared as defined hereinabove has the following structure:

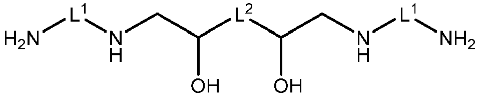

Wherein L¹ and L² are as defined hereinabove, or in any embodiment described in relation thereto.

L¹ and L² are as defined hereinabove or in any embodiment described in relation thereto.

R^{3a} corresponds to the carbon chain of a mono-carboxylic acid that is reacted with the purified diadduct. Typically, mono-fatty acids have a saturated or unsaturated aliphatic chain. R^{3a} is therefore an alkyl or alkenyl group having one less carbon atom than was present in the mono-fatty acid, because in formula (2a) the carboxylic acid carbon atom is represented separately from R^{3a}. Similarly, R^{3b} corresponds to the carbon chain of a dimer acid that is reacted with the purified diadduct. Typically, dimer acids have a saturated or unsaturated aliphatic chain and may comprise cycloalkyl, cycloalkenyl, or aromatic sections due to the dimerisation reaction. R^{3b} is therefore hydrocarbyl- group, optionally comprising one or more alkenyl, cycloalkyl, cycloalkenyl, or aryl portion, having two less carbon atoms than was present in the dimer acid, because in formula (2b) the carboxylic acid carbon atoms are represented separately from R^{3b}**.** R^{3c} corresponds to the carbon chain of a trimer acid that is reacted with the purified diadduct. Typically, trimer acids have a saturated or unsaturated aliphatic chain and may comprise cycloalkyl, cycloalkenyl, or aromatic sections due to the trimerisation reaction. R^{3c} is therefore hydrocarbyl- group, optionally comprising one or more alkenyl, cycloalkyl, cycloalkenyl, or aryl portion, having three less carbon atoms than was present in the trimer acid, because in formula (2c) the carboxylic acid carbon atoms are represented separately from R^{3c}. Preferably R^{3b} and/or R^{3c} consist of hydrogen atoms and carbon atoms.

Optionally, R^{3a} is a C₁₁ to C₂₁ alkyl or alkenyl group, preferably a C₁₃ to C₁₉ alkyl or alkenyl group, most preferably a C₁₅ or C₁₇ alkyl or alkenyl group. Optionally, R^{3b} is a divalent -C₂₄ to C₃₈ hydrocarbyl- group, optionally comprising one or more alkenyl, cycloalkyl, cycloalkenyl, or aryl portion; most preferably wherein R^{3b} is a divalent -C₃₄ hydrocarbyl- group, optionally comprising one or more alkenyl, cycloalkyl, or cycloalkenyl portion. Optionally, R^{3c} is a trivalent -C₃₆ to C₅₇ hydrocarbyl- group, optionally comprising one or more alkenyl, cycloalkyl, cycloalkenyl, or aryl portion; preferably wherein R^{3c} is a trivalent -C₅₁ hydrocarbyl- group, optionally comprising one or more alkenyl, cycloalkyl, or cycloalkenyl portion.

In a fifth aspect, the present invention provides an A-B-alternating copolymeric epoxy resin curative consisting of repeating units of (A) and (B), end-capped with hydrogens; wherein repeating unit (A) is: 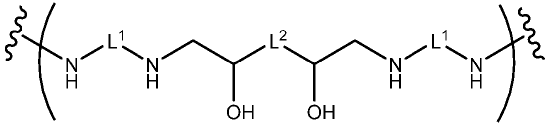
wherein each repeating unit (B) is either: 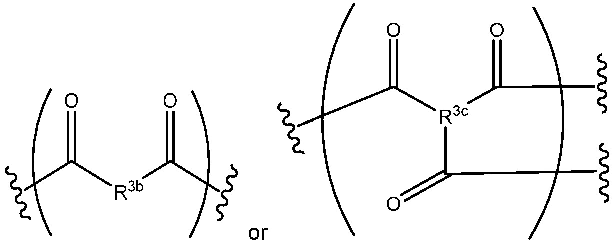
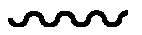 represents a point of attachment to the adjacent repeating unit, or the hydrogen endcap;
each L¹ is independently selected from: a divalent hydrocarbyl group comprising 2 to 15 carbon atoms;
each L² is independently selected from: a divalent hydrocarbyl group comprising 2 to 100 carbon atoms;
R^{3b} is s a divalent -C₁₄ to C₄₆ hydrocarbyl- group, optionally comprising one or more alkenyl, cycloalkyl, cycloalkenyl, or aryl portion;
R^{3c} is a trivalent -C₂₁ to C₆₉ hydrocarbyl- group, optionally comprising one or more alkenyl, cycloalkyl, cycloalkenyl, or aryl portion;
and wherein the copolymer comprises from 3 to 20 repeating units; and
wherein the A-B-alternating copolymeric epoxy resin curative comprises less than 0.1 wt. % of a compound defined by the formula H₂N-L³-NH₂, wherein the L³ group is the same as any one or more of the L¹ groups present in any one of the (A) repeating units, as determined by GC.

The A-B-alternating copolymer is an example of amide containing compounds which may be prepared from one or more fatty acids, specifically dimer acids and/or trimer acids and a purified diadduct prepared as defined hereinabove, in the case of the A-B-alternating copolymer described herein, the purified diadduct prepared as defined hereinabove has the following structure:

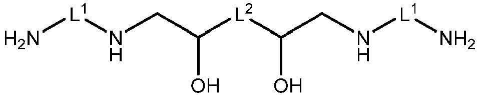

Wherein L¹ and L² are as defined hereinabove, or in any embodiment described in relation thereto.

The (A) repeating unit is derived from the purified diadduct. The (B) repeating unit is derived from a dimer acid (where the (B) repeating unit comprises R^{3b}), or a trimer acid (where the (B) repeating unit comprises R^{3c}). Repeating units (A) and (B) are connected by amide bonds. The A-B-alternating copolymeric epoxy resin curative may be straight chain or branched. Where the A-B-alternating copolymeric epoxy resin curative is straight chain, it comprises only dimer acid residues, which are divalent and do not allow for branching. Trimer acid residues are trivalent and thus where trimer acid residues are present a branch will occur in the A-B-alternating copolymeric epoxy resin curative. A trimer acid residue will thus be adjacent to three (A) repeating units, unless it is a terminal residue.

An A-B-alternating copolymer consists of alternating repeating units of A and B and hydrogen end-caps. The end-caps refer to the group present at the terminus of the polymer. An example A-B-alternating copolymeric epoxy resin curative may have the following structure: 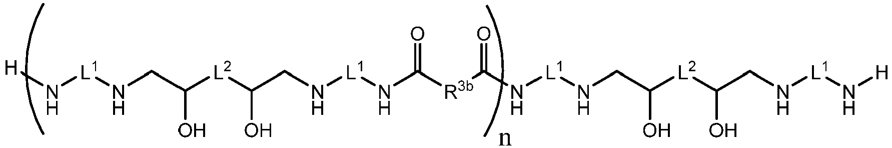 wherein n is from 1 to 9.

It is preferable that the terminal repeating units of the A-B-alternating copolymeric epoxy resin are all repeating unit (A) so that each terminus is a primary amine. This can be achieved by using an excess of purified diadduct or by further reaction with purified diadduct after an initial polymerisation stage.

L¹ and/or L² may be as defined hereinabove or in any embodiment described in relation thereto. R^{3b} and/or R^{3c} may as defined hereinabove or in any embodiment described in relation thereto. The minimum total number of (A) and (B) repeating units may be for example, 4, 5, 6, 7, 8, 9, or 10. The maximum total number of (A) and (B) repeating units may be for example, 19, 18, 17, 16, 15, 14, 12, or 11. For example, the A-B-alternating copolymer may comprise from 4 to 20 repeating units, preferably 5 to 20 repeating units, more preferably 10 to 20 repeating units. For example, the A-B-alternating copolymer may comprise from 3 to 15 repeating units, preferably 3 to 12 repeating units, more preferably 3 to 11 repeating units.

In a sixth aspect, the present invention provides an epoxy resin curative of formula (3): 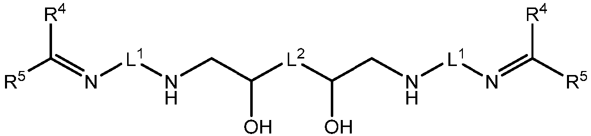 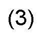 wherein:
each R⁴ is independently selected from: -H or a hydrocarbyl group comprising 1 to 50 carbon atoms;
each R⁵ is independently selected from: -H or a hydrocarbyl group comprising 1 to 50 carbon atoms;
   or where the R⁴ and R⁵ on the same carbon atom are taken together with the carbon atom to which they are attached to form a cyclic hydrocarbyl group comprising 4 to 50 carbon atoms.
Each L¹ is independently selected from: a divalent hydrocarbyl group comprising 2 to 15 carbon atoms;
each L² is independently selected from: a divalent hydrocarbyl group comprising 2 to 100 carbon atoms;
wherein the epoxy resin curative comprises less than 0.1 wt. % of a compound defined by the formula H₂N-L³-NH₂, wherein the L³ group is the same as any one or more of the L¹ groups present in the epoxy resin curative of formula (3), as determined by GC.

The epoxy resin curative of formula (3) is an example of a ketimine and/or aldimine containing compound which may be prepared from one or more ketone and/or aldehyde containing compound and a purified diadduct prepared as defined hereinabove, in the case of the epoxy resin curative of formula (3) the purified diadduct prepared as defined hereinabove has the following structure:

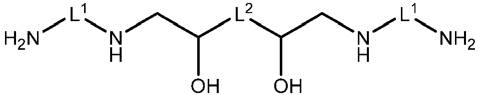

Wherein L¹ and L² are as defined hereinabove, or in any embodiment described in relation thereto.

As discussed above, ketimine and/or aldimine containing compounds are useful as epoxy resin curatives as a ketimine or aldimine group can be hydrolysed to reveal a primary amine.

A ketimine or aldimine or aldimine containing compound can be prepared by reaction of a ketone or an aldehyde with a primary amine, for example, a primary amine present on the purified diadduct as defined herein. The ketone or aldehyde containing compound from which the epoxy resin curative of formula (3) is derived has the structure R⁴R⁵C=O. R⁴ and/or R⁵ may be hydrogen, in which case the compound is an aldehyde containing compound and the resulting epoxy resin curative of formula (3) is an aldimine containing compound, in the context of the present invention formaldehyde is considered to be an aldehyde and thus a compound wherein R⁴ and R⁵ are hydrogen is an aldimine containing compound. If neither of R⁴ or R⁵ are hydrogen, and thus are hydrocarbyl groups comprising 1 to 50 carbon atoms then the compound is a ketone containing compound and the resulting epoxy resin curative of formula (3) is a ketimine containing compound. It is possible that one R⁴ group is hydrogen and the other is a hydrocarbyl group comprising 1 to 50 carbon atoms, such that the resulting epoxy resin curative of formula (3) comprises an aldimine and a ketimine group.

R⁴ and R⁵ may be derived from any of the suitable ketones or aldehydes described above. For example, in the case of methyl isobutyl ketone R⁴ is methyl and R⁵ is isobutyl. For example, in the case of acetaldehyde, R⁴ is hydrogen and R⁵ is ethyl. For example, in the case of furfural, R⁴ is hydrogen and R⁵ is furan. Preferably, R⁴ and/or R⁵ consist of hydrogen and carbon atoms.

Optionally, each R⁴ is independently selected from: -H, -C₁ to C₁₂ alkyl, -C₂ to C₁₂ alkenyl, -C₂ to C₁₂ alkenyl, and -C₆ aryl, optionally substituted with one or more -C₁ to C₁₂ alkyl, and/or -C₆ aryl; preferably wherein each R⁴ is independently selected from: -H, -C₁ to C₁₂ alkyl; preferably wherein each R⁴ is independently selected from: -H, -C₁ to C₆ alkyl; more preferably wherein each R⁴ is independently selected from: -H, -C₁ to C₃ alkyl. Optionally, each R⁵ is independently selected from: -C₁ to C₁₂ alkyl, -C₂ to C₁₂ alkenyl, -C₂ to C₁₂ alkenyl, and -C₆ aryl, optionally substituted with one or more -C₁ to C₁₂ alkyl, and/or -C₆ aryl; preferably wherein each R⁵ is independently selected from: -C₁ to C₁₂ alkyl; preferably wherein each R⁵ is independently selected from: -C₁ to C₆ alkyl; more preferably wherein each R⁵ is independently selected from: -C₁ to C₃ alkyl.

In the case that one or more cyclic ketone, such as cyclohexanone or cyclopentanone, is used to prepare the epoxy resin curative of formula (3) the R⁴ and R⁵ on the same carbon atom are taken together with the carbon atom to which they are attached to form a cyclic hydrocarbyl group comprising 4 to 50 carbon atoms. The cyclic hydrocarbyl group comprising 4 to 50 carbon atoms may only include the same R⁴, R⁵, attached to a common carbon atom. None, one, or both of the pairs of R⁴ and R⁵ may be included in a cyclic hydrocarbyl group comprising 4 to 50 carbon atoms. Preferably, the R⁴ and R⁵ on the same carbon atom are taken together with the carbon atom to which they are attached to form a C₄ to C₁₂ cycloalkyl group, preferably a C₄ to C₆ cycloalkyl group. Preferably the cyclic hydrocarbyl group comprising 4 to 50 carbon atoms consists of carbon and hydrogen atoms.

L¹ and/or L² may be as defined hereinabove or in any embodiment described in relation thereto.

In a seventh aspect, the present invention provides an epoxy resin curative composition comprising one or more epoxy resin curative of formula (1), (2a), (2b), (2c), (3), or an A-B-alternating copolymeric epoxy resin curative as defined herein, and comprising less than 0.1 wt. of a compound defined by the formula H₂N-L³-NH₂, wherein the L³ group is the same as any one or more of the L¹ groups present in the epoxy resin curative of formula (1), (2a), (2b), (2c), (3), or the A-B-alternating copolymeric epoxy resin curative as defined herein, as a percentage of the mass of the one or more epoxy resin curative of formula (1), (2a), (2b), (2c), (3), or the A-B-alternating copolymeric epoxy resin curative as defined herein, as determined by GC. Optionally, the epoxy resin curative composition may comprise less than 0.05 wt. % of a compound defined by the formula H₂N-L³-NH₂, preferably 0.025 wt. % of a compound defined by the formula H₂N-L³-NH₂, more preferably 0.01 wt. % of a compound defined by the formula H₂N-L³-NH₂, as a percentage of the mass of the one or more epoxy resin curative of formula (1), (2a), (2b), (2c), (3), or A-B-alternating copolymeric epoxy resin curative as defined herein, as determined by GC.

The epoxy resin curative composition may comprise less than 0.1 mol. % of a compound defined by the formula H₂N-L³-NH₂ as a percentage of the moles of the one or more epoxy resin curative of formula (1), (2a), (2b), (2c), (3), epoxy resin curative as defined herein, as determined by GC, preferably 0.05 mol. % of a compound defined by the formula H₂N-L³-NH₂ as a percentage of the moles of the one or more epoxy resin curative of formula (1), (2a), (2b), (2c), (3), epoxy resin curative as defined herein, as determined by GC, more preferably 0.025 mol. % of a compound defined by the formula H₂N-L³-NH₂ as a percentage of the moles of the one or more epoxy resin curative of formula (1), (2a), (2b), (2c), (3), epoxy resin curative as defined herein, as determined by GC, even more preferably 0.01 mol. % of a compound defined by the formula H₂N-L³-NH₂ as a percentage of the moles of the one or more epoxy resin curative of formula (1), (2a), (2b), (2c), (3), epoxy resin curative as defined herein, as determined by GC.

The composition may be further defined as per any of the embodiment described in relation to the second aspect. Optionally, a resin composition containing a ketimine and/or aldimine containing compound may be diluted with the corresponding ketone and/or aldehyde containing compound, from which it was derived, i.e. one or more compound of the formula R⁴R⁵=O.

In an eighth aspect, the present invention provides a method for preparing a cured epoxy resin, said method comprising:
a) contacting an epoxy resin with an epoxy resin curative of formula (1), (2a), (2b), (2c), (3), or the A-B-alternating copolymeric epoxy resin curative as defined herein; and
b) forming a cured epoxy resin, preferably wherein the epoxy resin is selected from glycidyl amines, epoxidized novolacs and bisphenols (A or F) or halogenated analogues thereof.

Examples of epoxy-based resins suitable for use in the present invention include polyglycidyl ethers of polyhydric phenols, epoxidised novolacs or similar glycidated polyphenolic resins, glycidated bisphenols, such as glycidated bisphenol A or F, or halogenated (e.g. chlorinated or fluorinated) analogues thereof; polyglycidyl ethers of alcohols, glycols or polyglycols, and polyglycidyl esters of polycarboxylic acids. Preferred examples of epoxy resins are polyglycidyl ethers of a polyhydric phenol. Polyglycidyl ethers of polyhydric phenols can be produced, for example, by reacting an epihalohydrin with a polyhydric phenol in the presence of an alkali. Examples of suitable polyhydric phenols include: 2,2-bis (4-hydroxyphenyl) propane (bisphenol-A); 2,2-bis(4-hydroxy-3-tert-butylphenyl)propane; 1,1-bis(4-hydroxyphenyl) ethane; 1,1-bis(4-hydroxyphenyl) isobutane; bis(2-hydroxy-1-naphthyl) methane; 1,5-dihydroxynaphthalene; 1,1-bis(4-hydroxy-3-alkylphenyl) ethane and the like. Commercial examples of preferred epoxy resins that may be used include EPILOK 60-600 (RTM).

The epoxy resin to which the curative of the present invention is added may include other additives, such as flow control additives, antifoam agents, or anti-sag agents, as well as other additives such as pigments, reinforcing agents, fillers, elastomers, stabilizers, extenders, plasticizers, or flame retardants depending on the application.

The epoxy resin can be any epoxy resin which can be cured by the epoxy resin curatives of the present invention. Generally, the epoxy resin can be any curable epoxy resin and may have, for instance, a 1,2-epoxy equivalency greater than one and preferably, on average, more than 1.5 epoxide groups per molecule. The epoxy resin can be saturated or unsaturated, linear or branched, aliphatic, cycloaliphatic, aromatic or heterocyclic, and may be substituted, provided such substituents do not interfere with the curing reaction. Such substituents can include bromine.

In a ninth aspect, the present invention provides a cured epoxy resin prepared, or preparable, by the method as defined herein.

In a tenth aspect, the present invention provides a use of an epoxy resin curative of formula (1), (2a), (2b), (2c), (3), or the A-B-alternating copolymeric epoxy resin curative as defined herein, for causing the crosslinking of an epoxy resin.

The invention will now be described by reference to the following non-limiting Examples and the Figures.

### EXAMPLES

All of the GC measurements described in the examples were performed using an Agilent 6850 GC/FID.

### Comparative Example 1 - Preparation of a Conventional Mannich Base Epoxy Resin Curative

423 grams [2.9 Mols] of Triethylene Tetramine [TETA] are charged to a 1 litre, round-bottomed flask equipped with a condenser, mechanical stirrer, addition funnel and thermometer. The flask is set for atmospheric reflux, agitator started, and the contents are heated to 65-75°C. 164 grams [2 mols] of Formalin [Formaldehyde 36.5% Aqueous solution] is charged via the addition funnel over 2 hours maintaining the temperature between 65-75°C. Once charged the flask is held at 85-90°C for 1 hour. The flask is then cooled to 65°C.

188 grams [2 Mols] of Phenol is charged via the addition funnel over 2 hours maintaining the temperature between 65-70°C. Once charged the flask is held at 85-90°C for 1 hour. The flask is then heated to reflux and held at reflux for 1 hour.

The flask is reconfigured for atmospheric distillation and distilled up to 120°C over 2 hours collecting distillate.

The flask is then configured for vacuum distillation and held under reduced pressure of 0.948 bar for 30 minutes whilst maintaining the temperature at 120 °C. The flask was configured for atmospheric reflux and diluted 50:50 in Benzyl Alcohol. The flask was cooled and evaluated. The resultant product has the following properties.

| **Physical property** | **Unit** | **Method** | **Result** |
|---|---|---|---|
| Colour | Gardner | ASTM D6166 | 11 |
| Viscosity | mPa•s | ASTM D-445 | 100 |
| Gel time [100:50]* | Minutes | Techne gel-timer | 14 |
| Free TETA | Wt. % | GC | 9 |
| Free phenol | Wt. % | GC | 8.5 |

| | | | |
|---|---|---|---|
| *Gel-time - [150 gram Weight 100:50 w/w - EPILOK 60-600 (RTM) epoxy resin EEW 190] | | | |

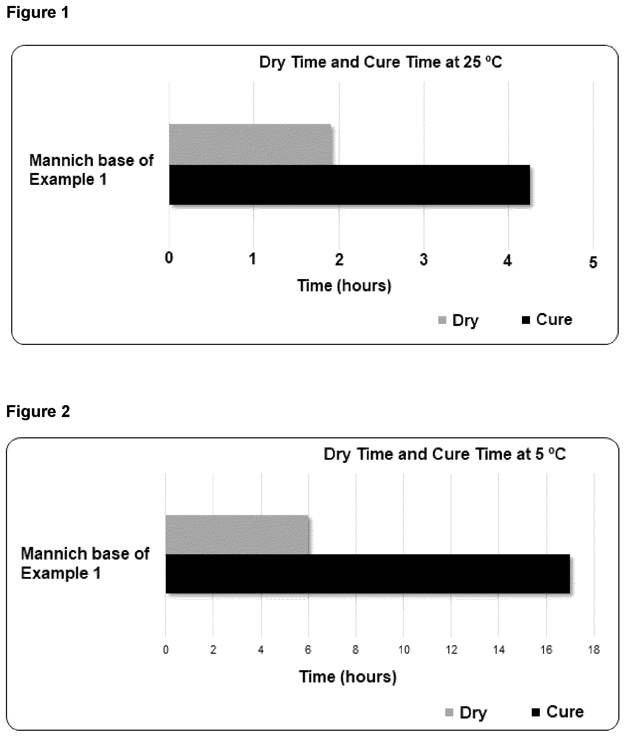

Figure 1 shows the dry time and cure time of an epoxy resin [Epoxide Equivalent Weight 190 g/mol] : Mannich base of Example 1 [Active Hydrogen Equivalent Weight 95 g/mol] mixture at 25 °C. 250 µm thin film. The mixture formed a greasy film. Mix ratio: Epoxy resin [Epoxide Equivalent Weight 190 g/mol] : Mannich base of example 1 [Active Hydrogen Equivalent Weight 95 g/mol] = 100 : 50.

Figure 2 shows the dry time and cure time of an epoxy resin [Epoxide Equivalent Weight 190 g/mol] : Mannich base of Example 1 [Active Hydrogen Equivalent Weight 95 g/mol] mixture at 5 °C. 250 µm thin film. The mixture formed a greasy/tacky film. Mix ratio: Epoxy resin [Epoxide Equivalent Weight 190 g/mol] : Mannich base of example 1 [Active Hydrogen Equivalent Weight 95 g/mol] = 100 : 50.

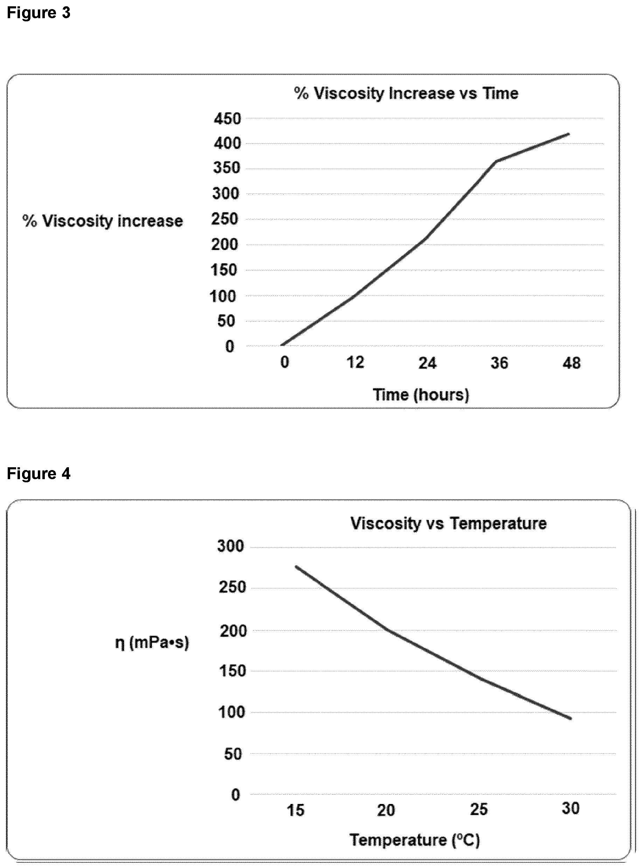

Figure 3 shows the % increase in viscosity at 100 °C vs time, of the Mannich base epoxy resin curative of Comparative Example 1. This gives a measure of temperature stability.

As can be seen from the level of free TETA detected in the Mannich base epoxy resin curative of Comparative Example 1 (9 wt.%), vacuum distillation under reduced pressure of 0.948 bar for 30 minutes whilst maintaining the temperature at 120 °C was not suitable to purify the epoxy resin curative from free polyamine contamination.

### Comparative Example 2 - Preparation of a Conventional Amido-Amine Epoxy Resin Curative

378 grams [2 Mols] of Tetraethylene pentamine (TEPA) is charged to a 2 litre, round-bottomed flask equipped with a condenser, mechanical stirrer, addition funnel and thermometer. The flask is set for atmospheric reflux, agitator started, and the contents are heated to 25-35°C.

578 grams [2 Mols] of Tall oil fatty acid (TOFA) is added to the flask and the material mixed together. The flask is set for atmospheric distillation and distilled up to 200°C over 8 hours collecting distillate and monitoring acid value to <4 mg/KOH g⁻¹.

Once the acid value was obtained the flask was then cooled and evaluated. The resultant product has the following properties.

| **Physical property** | **Unit** | **Method** | **Result** |
|---|---|---|---|
| Colour | Gardner | ASTM D6166 | 9 |
| Viscosity | mPa•s | ASTM D-445 | 340 |
| Gel time [100:50]* | Minutes | Techne gel-timer | 89 |
| Free TEPA | Wt. % | GC | 3.1 |

| | | | |
|---|---|---|---|
| *Gel-time - [150 gm Weight 100:50 w/w - EPILOK 60-600 (RTM) epoxy resin EEW 190] | | | |

As can be seen from the level of free TEPA detected in the amido-amine epoxy resin curative of Comparative Example 2 (3.1 wt.%), atmospheric distillation at 200 °C over 8 hours was not suitable to purify the epoxy resin curative from free polyamine contamination.

### Comparative Example 3 - Preparation of a Conventional Ketimine Epoxy Resin Curative

120 grams [2 Mols] of Ethylene Diamine (EDA) is charged to a 1 litre, round-bottomed flask equipped with a condenser, mechanical stirrer, addition funnel and thermometer. The flask is set for atmospheric reflux and the agitator started.

600 grams [6 Mols] of Methyl Iso-Butyl Ketone (MIBK) is added to the flask and the material mixed together. The flask is set for atmospheric azeotropic distillation and azeotropically distilled up to 118-122°C over 8 hours collecting distillate. Once approximately 68 grams of water has been collected the flask was reconfigured for vacuum distillation and the excess MIBK and residual water removed whilst maintaining a temperature of 120°C and under reduced pressure of 0.948 bar. Once approximately 110-120 grams MIBK and 2-4 grams water were removed the flask was then cooled and evaluated. The resultant product has the following properties.

| **Physical property** | **Unit** | **Method** | **Result** |
|---|---|---|---|
| Colour | Gardner | ASTM D6166 | 3 |
| Viscosity | mPa•s | ASTM D-445 | 11 |
| Free EDA | Wt. % | GC | 2.4 |

As can be seen from the level of free EDA detected in the ketimine epoxy resin curative of Comparative Example 3 (2.4 wt.%), vacuum distillation under reduced pressure of 0.948 bar for 30 minutes whilst maintaining the temperature at 120 °C was not suitable to purify the epoxy resin curative from free polyamine contamination.

### Example 4 - Preparation of a Purified EDA Diadduct

1330 grams [1 Mol] of EPILOK 60-701 X75* (RTM) is charged to a 2 litre, round-bottomed flask equipped with a condenser, mechanical stirrer, addition funnel and thermometer. The flask is set for atmospheric reflux, agitator started, and the contents are equilibrated at 25°C.

132 grams [2.2 mols] of Ethylene Diamine is charged immediately and the material mixed together. The exotherm is controlled to below 50°C and once stable at 50°C it is held between 50-60°C for 30 minutes.

The flask is then heated to 100°C under controlled conditions and held for 1 hour. The flask is reconfigured for atmospheric distillation and distilled up to 150°C over 2 hours collecting distillate. The flask is then configured for vacuum distillation and held under reduced pressure of 0.948 bar for 30 minutes whilst maintaining the temperature at 150°C. The flask was then cooled and evaluated. The resultant product has the following properties.

*EPILOK 60-701 X75 (RTM) is an epoxy resin with an EEW of 450-500 g/eq [base resin] dissolved in Xylene at a solids concentration of 75%.

| **Physical property** | **Unit** | **Method** | **Result** |
|---|---|---|---|
| Colour | Gardner | ASTM D6166 | 3 |
| Melting point | °C | ASTM E28-18 | 106 |
| Amine value | mgKOH/g | ASTM D2074-07(2019) | 184 |
| Free EDA | Wt. % | GC | <0.1 ** |

| | | | |
|---|---|---|---|
| **none detected. | | | |

As can be seen from the level of free EDA detected in the purified diadduct of Example 4 (none detected by GC), vacuum distillation under reduced pressure of 0.948 bar for 30 minutes whilst maintaining the temperature at 150 °C was suitable to completely purify the purified diadduct from free polyamine contamination.

### Example 5 - Preparation of a Purified TEPA Diadduct

378 grams [2 Mols] of Tetraethylene pentamine (TEPA) is charged to a 1 litre, round-bottomed flask equipped with a condenser, mechanical stirrer, addition funnel and thermometer. The flask is set for atmospheric reflux and the agitator started. 300 grams of Xylene are added, and the contents are equilibrated at 55°C.

380 grams [1 Mol] of EPILOK 60-600* (RTM) is charged in 6 aliquots over a 360-minute period maintaining the temperature between 45 - 55°C. Following addition, the flask contents are maintained at 55-65°C for 30 minutes.

The flask is then heated to 80°C under controlled conditions and held for 1 hour. The flask is reconfigured for atmospheric distillation and distilled up to 220°C over 10 hours collecting distillate. The flask was then cooled and evaluated. The resultant product has the following properties.

*EPILOK 60-600 (RTM) is a Bis Phenol A Di Glycidyl Ether EEW 182-190 g/eq.

| **Physical property** | **Unit** | **Method** | **Result** |
|---|---|---|---|
| Colour | Gardner | ASTM D6166 | 16 |
| Melting point | °C | ASTM E28-18 | Viscous solid, <50 |
| Free TEPA | Wt. % | GC | <0.1 ** |

| | | | |
|---|---|---|---|
| **none detected. | | | |

As can be seen from the level of free TEPA detected in the purified diadduct of Example 5 (none detected by GC), atmospheric distillation at 220 °C over 10 hours was suitable to completely purify the purified diadduct from free polyamine contamination.

### Example 6 - Preparation of a Polyamine Free Mannich Base Epoxy Resin Curative

672 grams [0.3 Mols] of the purified EDA diadduct of Example 4 pre-dissolved 50% by weight in Benzyl alcohol is charged to a 1 litre, round-bottomed flask equipped with a condenser, mechanical stirrer, addition funnel and thermometer.

24.6 grams [0.3 Mols] of Formalin [Formaldehyde 36.5% Aqueous solution] is charged to the flask. The flask is set for atmospheric reflux, agitator started, and the contents are heated to 85-90°C. The flask is held at 85-90°C for 1 hour. The flask is then cooled to 60°C.

9.4 grams [0.1 Mols] of Phenol is charged to the flask and temperature increased to 95°C and then held at 95-98°C for 1 hour. Free Phenol not detected. The flask was then cooled and evaluated. The resultant product has the following properties.

| **Physical property** | **Unit** | **Method** | **Result** |
|---|---|---|---|
| Colour | Gardner | ASTM D6166 | 17 |
| Viscosity | mPa•s | ASTM D-445 | 14100 |
| Gel time [100:250]* | Minutes | Techne gel-timer | 44 |
| Free EDA | Wt. % | GC | <0.1 ** |
| Free phenol | Wt. % | GC | <0.1** |

| | | | |
|---|---|---|---|
| *Gel-time - [150 gram Weight 100:250 w/w - EPILOK 60-600 (RTM) epoxy resin EEW 190] **Not detected. | | | |

Figure 4 shows the viscosity (mPa•s) vs temperature (°C) of the polyamine free Mannich base epoxy resin curative of Example 6, as measured by ASTM D2556-14(2018).

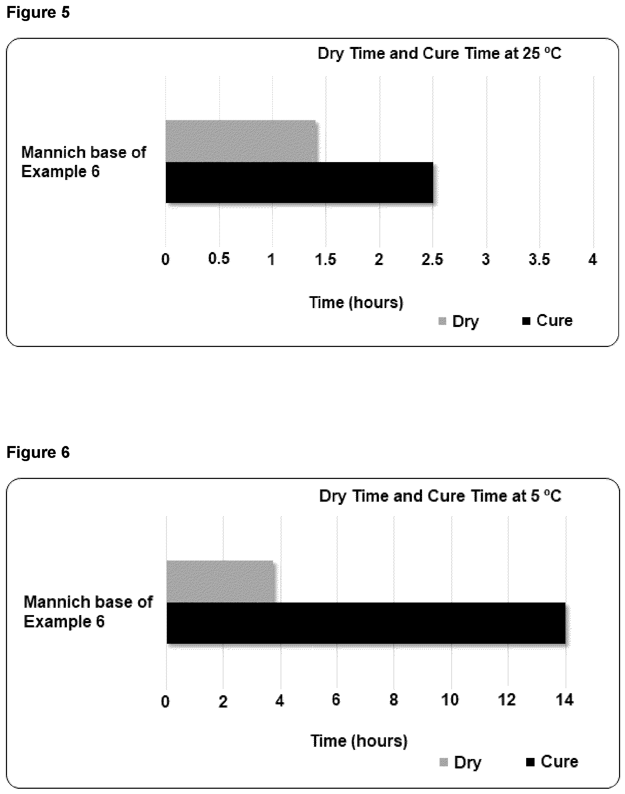

Figure 5 shows the dry time and cure time of an epoxy resin [Epoxide Equivalent Weight 190 g/mol] : Mannich base of example 6 [Active Hydrogen Equivalent Weight 475 g/mol] mixture at 25 °C. 250 µm thin film. The mixture formed a clear glossy film with a slight ripple. Mix ratio: Epoxy resin [Epoxide Equivalent Weight 190 g/mol] : Mannich base of example 6 [Active Hydrogen Equivalent Weight 475 g/mol] = 100 : 250.

Figure 6 shows the dry time and cure time of an epoxy resin [Epoxide Equivalent Weight 190 g/mol] : Mannich base of example 6 [Active Hydrogen Equivalent Weight 475 g/mol] mixture at 5 °C. 250 µm thin film. The mixture formed a clear glossy film with a slight ripple. Mix ratio: Epoxy resin [Epoxide Equivalent Weight 190 g/mol] : Mannich base of example 6 [Active Hydrogen Equivalent Weight 475 g/mol] = 100 : 250.

As can be seen, the Mannich base of Example 6 enjoys more rapid cure times and dry times than the Mannich base of Comparative Example 1.

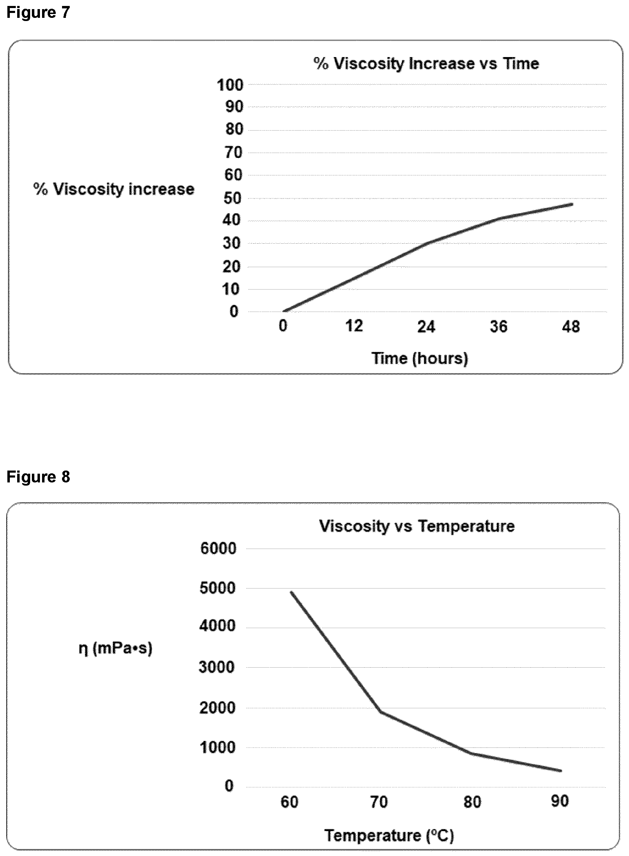

Figure 7 shows the % increase in viscosity at 100 °C vs time, of the polyamine free Mannich base epoxy resin curative of Example 6. This demonstrates gives a measure of stability. As can be seen, the Mannich base of Example 6 enjoys a far greater temperature stability than the Mannich base of Comparative Example 1.

### Example 7 - Preparation of a Polyamine Free Amido-Amine Epoxy Resin Curative

284 grams [1 Mol] of Tall oil fatty acid (TOFA) is charged to a 2 litre, round-bottomed flask equipped with a condenser, mechanical stirrer, addition funnel and thermometer. The flask is set for atmospheric reflux, agitator started, and the contents are heated to 25-35°C.

758 grams [1 Mols] of the purified diadduct of Example 5 is added to the flask and the material mixed together. The flask is set for atmospheric distillation and distilled up to 200°C over 8 hours collecting distillate and monitoring acid value to <4 mg/KOH g⁻¹. Once the acid value was obtained the flask was then cooled and evaluated. The resultant product has the following properties.

| **Physical property** | **Unit** | **Method** | **Result** |
|---|---|---|---|
| Colour | Gardner | ASTM D6166 | 18 |
| Viscosity at 60 °C | mPa•s | ASTM D-445 | 4900 |
| Free TEPA | Wt. % | GC | <0.1* |

| | | | |
|---|---|---|---|
| *Not detected. | | | |

Figure 8 shows the viscosity (mPa•s) vs temperature (°C) of the polyamine free Mannich base epoxy resin curative of Example 7, as measured by ASTM D2556-14(2018).

### Example 8 - Preparation of a Polyamine Free Amido-Amine Epoxy Resin Curative Solution

This amido-amine epoxy resin curative of Example 7 was subsequently diluted in Methoxy Propanol [Propylene glycol methyl ether] as follows.

682 Grams of Methoxy Propanol is charged to a 1 litre, round-bottomed flask equipped with a condenser, mechanical stirrer, addition funnel and thermometer. The flask is set for atmospheric reflux and the agitator started.

1024 Grams [1 Mol] of pre-heated [60C] amido-amine epoxy resin curative was added to the flask and the material mixed together. The flask is set for atmospheric reflux and heated to 80°C for 30 minutes. A homogenous solution was obtained, and the flask was then cooled and evaluated. The resultant product has the following properties.

| **Physical property** | **Unit** | **Method** | **Result** |
|---|---|---|---|
| Colour | Gardner | ASTM D6166 | 14 |
| Viscosity at 60 °C | mPa•s | ASTM D-445 | 1600 |
| Solvent content | Wt. % | Calculated | 40 |
| Free TEPA | Wt. % | GC | <0.1* |
| Active hydrogen equivalent weight (base) | g/mol | Calculated | 104.5 |
| Active hydrogen equivalent weight (solution) | g/mol | Calculated | 174 |

| | | | |
|---|---|---|---|
| *Not detected. | | | |

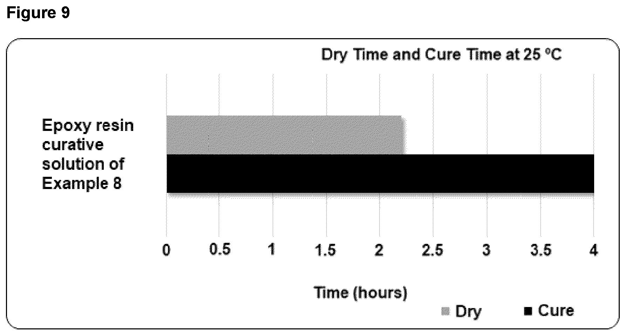

Figure 9 shows the dry time and cure time of an epoxy resin [Epoxide Equivalent weight 190 g/mol] : epoxy resin curative solution of Example 8 [Active Hydrogen Equivalent Weight 174 g/mol] mix ratio of 100 : 91; mixture at 25 °C; 250 µm thin film. The mixture formed a clear greasy film.

### Example 9 - Preparation of a Polyamine Free Ketimine Epoxy Resin Curative

600 Grams [6 Mols] of MIBK is charged to a 2 litre, round-bottomed flask equipped with a condenser, mechanical stirrer, addition funnel and thermometer. The flask is set for atmospheric reflux, agitator started, and 1120 grams [1 Mol] of the purified EDA diadduct of Example 4 added.

The contents are heated to 100-110°C to dissolve the adduct. Once in solution the flask is configured for azeotropic distillation and azeotropically distilled up to 120-122°C over 8 hours collecting distillate. The process is continued up to a peak temperature of 170C before the flask was cooled to 140°C, reconfigured for vacuum distillation and vacuum distilled whilst maintaining a temperature of 140°C and under reduced pressure of 0.948 bar. Once fully distilled the flask is set for atmospheric reflux and MIBK added to dilute the product to 50% solids content. The flask was then cooled and evaluated. The resultant product has the following properties.

| **Physical property** | **Unit** | **Method** | **Result** |
|---|---|---|---|
| Colour | Gardner | ASTM D6166 | 17 |
| Viscosity at 25 °C | mPa•s | ASTM D-445 | 340 |
| Free EDA | Wt. % | GC | <0.1* |

| | | | |
|---|---|---|---|
| *Not detected. | | | |

## Claims

1. A method of forming an epoxy resin curative, the method comprising the steps of:
a) contacting a difunctional epoxide compound with one or more polyamine, in a difunctional epoxide compound to polyamine molar ratio of 1 : 2 or more, to form a mixture comprising a diadduct of the one or more polyamine with the difunctional epoxide compound, wherein the one or more polyamine, comprises at least two active amine hydrogens and has a boiling point at atmospheric pressure of 500 °C or less;
b) distilling the mixture produced in step a) under reduced pressure and/or elevated temperature to remove any remaining polyamine and provide a purified diadduct; wherein the purified diadduct comprises less than 0.1 wt. % of the one or more polyamine, as determined by GC (gas chromatography); and
c) contacting the purified diadduct formed in step b) with one of:
i) one or more aldehyde, and an optionally substituted phenolic compound, to form a phenolic Mannich base for use as an epoxy resin curative;
ii) one or more fatty acids, including dimer acids and trimer acids, or an ester thereof, to form an amide containing compound comprising at least one amine group for use as an epoxy resin curative; or
iii) one or more ketone and/or aldehyde containing compound, to form a ketimine and/or aldimine containing compound for use as an epoxy resin curative.

2. The method of Claim 1, wherein one or more of the following are satisfied:
I) the one or more polyamine has a boiling point of 450 °C or less, preferably 400 °C or less, more preferably 350 °C or less, even more preferably 300 °C or less, even more preferably 250 °C or less, most preferably 200 °C or less;
II) distilling the mixture produced in step a) takes place at at least 60 °C, preferably at at least 80 °C, more preferably at at least 100 °C, even more preferably at at least 120 °C, even more preferably at at least 140 °C, even more preferably at at least 160 °C, even more preferably at at least 180 °C, even more preferably at at least 200 °C, even more preferably at at least 220 °C, even more preferably at at least 240 °C, most preferably at at least 260 °C;
III) distilling the mixture produced in step a) takes place at a pressure of 0.50 bar or lower, preferably 0.30 bar or lower, more preferably 0.1 bar or lower, even more preferably 0.05 bar, even more preferably 0.03 bar, even more preferably 0.01 bar or lower, even more preferably 0.005 bar or lower, even more preferably 0.003 bar or lower, most preferably 0.001 bar or lower;
IV) the difunctional epoxide compound is a bisphenol diglycidyl ether or polymer thereof; preferably the difunctional epoxide compound is bisphenol A diglycidyl ether or polymer thereof;
V) the one or more polyamine comprises at least two primary amine groups, preferably wherein the one or more polyamine is selected from: ethylene diamine, diethylene triamine, triethylene tetraamine, tetraethylene pentaamine, pentaethylene hexamine, a Jeffamine (RTM), cadaverine, putrescene, tris(2-aminoethyl)amine, isophorone diamine, 4,4'-diaminodicyclohexylmethane, 1,3-Bis (Aminomethyl Cyclohexane), m-Xylylenediamine, and m-phenylenediamine;
VI) distilling the mixture produced in step a) under reduced pressure and/or elevated temperature takes place for 10 minutes or more, preferably 30 minutes or more, more preferably 1 hour or more, even more preferably 2 hours or more, even more preferably 5 hours or more, even more preferably 10 hours or more, most preferably 24 hours or more;
VII) step a) takes place in the presence of a solvent, and wherein the solvent is removed in step b), preferably wherein the solvent is selected from toluene, xylene, ethyl acetate, pet ether, kerosine, pentane, hexane, cyclohexane, heptane, or an alcohol, such as methanol, ethanol, propanol, or benzyl alcohol;
VIII) the one or more aldehyde is formaldehyde or furfural, and/or wherein the phenolic compound is selected from phenol, guaiacol, resorcinol, cresol, hydroquinone, catechol, cardanol, and phloroglucinol; preferably wherein the phenolic compound is phenol;
IX) the phenolic Mannich base for use as an epoxy resin curative comprises at least one primary amine group, preferably at least two primary amine groups;
X) the molar ratio of the optionally substituted phenolic compound to either the purified diadduct or the one or more aldehyde, is 1 : 2 or more, preferably 1 : 3 or more;
XI) the one or more fatty acids comprises one or more of:
i) a C₈ to C₂₄ saturated or unsaturated carboxylic acid, preferably a C₁₂ to C₂₂ saturated or unsaturated carboxylic acid or ester thereof, more preferably a C₁₄ to C₂₀ saturated or unsaturated carboxylic acid or ester thereof, for example, palmitic acid, oleic acid, and/or linoleic acid, or an ester thereof;
ii) a C₁₆ to C₄₈ dimer acid or ester thereof, preferably a C₂₄ to C₄₄ dimer acid or ester thereof, more preferably a C₂₈ to C₄₀ dimer acid or ester thereof, for example a C₃₆ dimer acid or ester thereof; and/or
iii) C₂₄ to C₇₂ trimer acid or ester thereof, preferably a C₃₆ to C₆₆ trimer acid or ester thereof, more preferably a C₃₂ to C₆₀ trimer acid or ester thereof, for example a C₅₄ trimer acid or ester thereof; and/or
XII) the ketone or aldehyde containing compound is a C₂ to C₁₅ alkyl group or C₃ to C₁₅ cycloalkyl group substituted with a carbonyl group; and optionally including one or more aromatic sections, for example, acetaldehyde, isobutyraldehyde, furfural, acetone, phenyl methyl ketone, or methyl isobutyl ketone.

3. An epoxy resin curative composition, comprising one or more epoxy resin curatives prepared or preparable by the method of Claim 1 or Claim 2, comprising less than 0.1 % of the one or more polyamine, as a percentage of the total mass of the one or more epoxy resin curatives of the composition prepared or preparable by the method of Claim 1 or Claim 2, as determined by GC (gas chromatography).

4. An epoxy resin curative of formula (1): 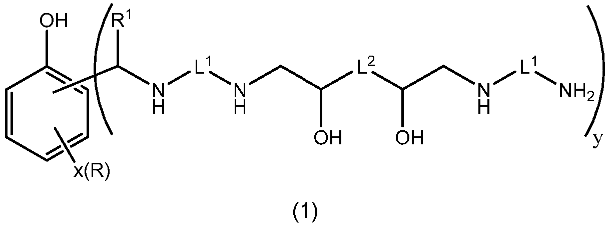 wherein:
each R is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, -C(O)OH, - C(O)OR², -C(O)NH₂, -C(O)NHR², -C(O)NR²₂, -O(CO)H, -O(CO)R², -NH(CO)H, - NH(CO)R², -NR²(CO)H, -NR²(CO)R², -SH, -SR², -SO₂H, -SO₂R², -SO₃R², -SO₃H, -SiR²₃,
- NO₂, -CN, -F, -Cl, -Br, and -I;
each R¹ is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, -C₆ to C₁₂ aryl, and -C₃ to C₁₂ heteroaryl;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino;
each L¹ is independently selected from: a divalent hydrocarbyl group comprising 2 to 15 carbon atoms;
each L² is independently selected from: a divalent hydrocarbyl group comprising 2 to 100 carbon atoms;
x is selected from 0, 1, 2, 3, or 4;
y is selected from 1, 2, or 3;
with the proviso that x + y is from 1 to 5; and
wherein the epoxy resin curative comprises less than 0.1 wt. % of a compound defined by the formula H₂N-L³-NH₂, wherein the L³ group is the same as any one or more of the L¹ groups present in the epoxy resin curative of formula (1), as determined by GC (gas chromatography).

5. An epoxy resin curative of formula (2a), (2b), or (2c): 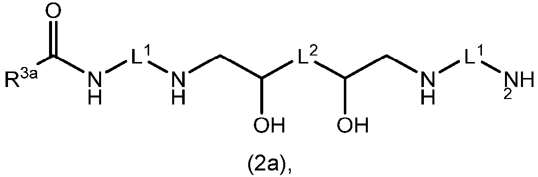 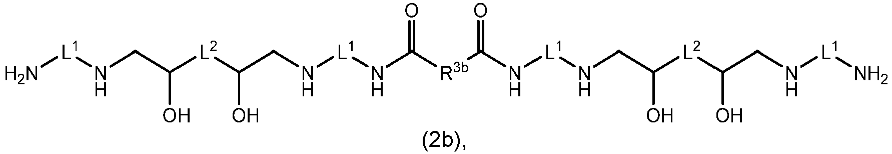 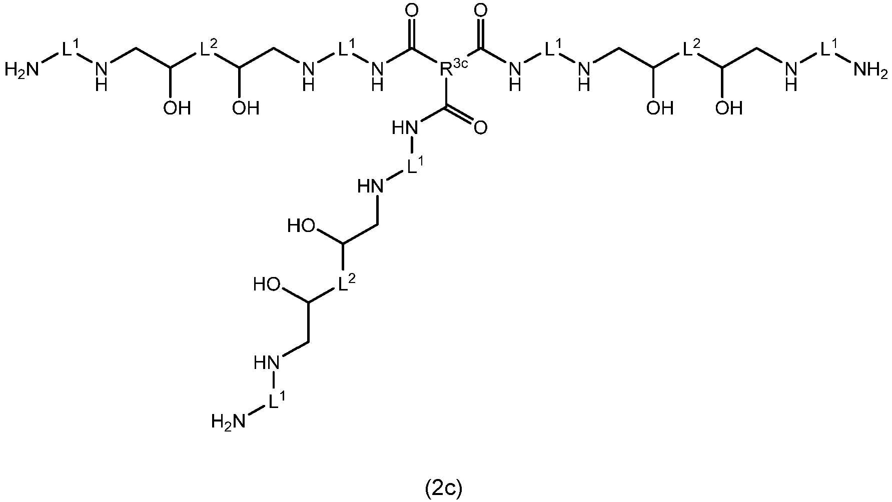 wherein:
each L¹ is independently selected from: a divalent hydrocarbyl group comprising 2 to 15 carbon atoms;
each L² is independently selected from: a divalent hydrocarbyl group comprising 2 to 100 carbon atoms;
R^{3a} is a C₇ to C₂₃ alkyl or alkenyl group;
R^{3b} is s a divalent -C₁₄ to C₄₆ hydrocarbyl- group, optionally comprising one or more alkenyl, cycloalkyl, cycloalkenyl, or aryl portion;
R^{3c} is a trivalent -C₂₁ to C₆₉ hydrocarbyl- group, optionally comprising one or more alkenyl, cycloalkyl, cycloalkenyl, or aryl portion; and
and wherein the epoxy resin curative comprises less than 0.1 wt. % of a compound defined by the formula H₂N-L³-NH₂, wherein the L³ group is the same as any one or more of the L¹ groups present in the epoxy resin curative of formula (2a), (2b), or (2c) as determined by GC (gas chromatography); or
an A-B-alternating copolymeric epoxy resin curative consisting of repeating units of (A) and (B), end-capped with hydrogens;
wherein repeating unit (A) is: 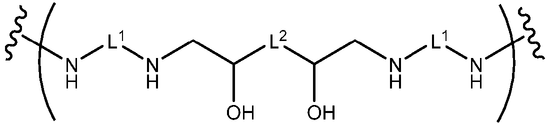
wherein each repeating unit (B) is either: 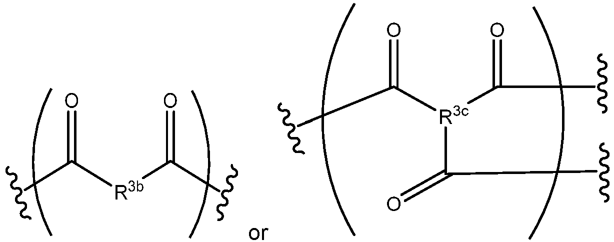
wherein:
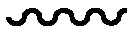 represents a point of attachment to the adjacent repeating unit, or the hydrogen end-cap;
each L¹ is independently selected from: a divalent hydrocarbyl group comprising 2 to 15 carbon atoms;
each L² is independently selected from: a divalent hydrocarbyl group comprising 2 to 100 carbon atoms;
R^{3b} is s a divalent -C₁₄ to C₄₆ hydrocarbyl- group, optionally comprising one or more alkenyl, cycloalkyl, cycloalkenyl, or aryl portion;
R^{3c} is a trivalent -C₂₁ to C₆₉ hydrocarbyl- group, optionally comprising one or more alkenyl, cycloalkyl, cycloalkenyl, or aryl portion;
and wherein the copolymer comprises from 3 to 20 repeating units; and
wherein the A-B-alternating copolymeric epoxy resin curative comprises less than 0.1 wt. % of a compound defined by the formula H₂N-L ³-NH₂, wherein the L³ group is the same
as any one or more of the L¹ groups present in any one of the (A) repeating units, as determined by GC (gas chromatography).

6. An epoxy resin curative of formula (3): 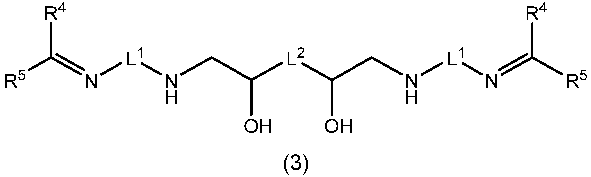 wherein:
each R⁴ is independently selected from: -H or a hydrocarbyl group comprising 1 to 50 carbon atoms;
each R⁵ is independently selected from: -H or a hydrocarbyl group comprising 1 to 50 carbon atoms;
or where the R⁴ and R⁵ on the same carbon atom are taken together with the carbon atom to which they are attached to form a cyclic hydrocarbyl group comprising 4 to 50 carbon atoms.
each L¹ is independently selected from: a divalent hydrocarbyl group comprising 2 to 15 carbon atoms;
each L² is independently selected from: a divalent hydrocarbyl group comprising 2 to 100 carbon atoms;
wherein the epoxy resin curative comprises less than 0.1 wt. % of a compound defined by the formula H₂N-L³-NH₂, wherein the L³ group is the same as any one or more of the L¹ groups present in the epoxy resin curative of formula (3), as determined by GC (gas chromatography).

7. An epoxy resin curative according to Claim 4, wherein:
i) each R is independently selected from: C₁ to C₁₀ alkyl, C₃ to C₁₀ cycloalkyl, C₂ to C₁₀ alkenyl, C₂ to C₁₀ alkynyl, C₁ to C₁₀ alkyloxy, C₁ to C₁₀ alkylamino, -OH, -OR², -NH₂, - NHR², -NR²₂, -CN, NO₂, -F, -Cl, -Br, and -I; and wherein each R² is independently selected from: C₁ to C₁₀ alkyl, C₃ to C₁₀ cycloalkyl, C₂ to C₁₀ alkenyl, C₂ to C₁₀ alkynyl, C₁ to C₁₀ alkoxy, and C₄ to C₁₀ alkylamino; preferably wherein R is selected from: -Me, - OH, and -OMe;
and/or wherein R¹ is independently selected from -H or -2-furanyl: and/or
ii) wherein y is 2 or 3, preferably 3.

8. An epoxy resin curative according to Claim 5, wherein:
i) R^{3a} is a C₁₁ to C₂₁ alkyl or alkenyl group, preferably a C₁₃ to C₁₉ alkyl or alkenyl group, most preferably a C₁₅ or C₁₇ alkyl or alkenyl group;
ii) R^{3b} is a divalent -C₂₄ to C₃₈ hydrocarbyl- group, optionally comprising one or more alkenyl, cycloalkyl, cycloalkenyl, or aryl portion; most preferably wherein R^{3b} is a divalent -C₃₄ hydrocarbyl- group, optionally comprising one or more alkenyl, cycloalkyl, or cycloalkenyl portion; and/or
iii) R^{3c} is a trivalent -C₃₆ to C₅₇ hydrocarbyl- group, optionally comprising one or more alkenyl, cycloalkyl, cycloalkenyl, or aryl portion; preferably wherein R^{3c} is a trivalent -C₅₁ hydrocarbyl- group, optionally comprising one or more alkenyl, cycloalkyl, or cycloalkenyl portion.

9. An epoxy resin curative according to Claim 6, wherein
i) each R⁴ is independently selected from: -H, -C₁ to C₁₂ alkyl, -C₂ to C₁₂ alkenyl, -C₂ to C₁₂ alkenyl, and -C₆ aryl; optionally substituted with one or more -C₁ to C₁₂ alkyl, and/or - C₆ aryl; preferably wherein each R⁴ is independently selected from: -H, -C₁ to C₁₂ alkyl; preferably wherein each R⁴ is independently selected from: -H, -C₁ to C₆ alkyl; more preferably wherein each R⁴ is independently selected from: -H, -C₁ to C₃ alkyl; and/or
ii) each R⁵ is independently selected from: -C₁ to C₁₂ alkyl, -C₂ to C₁₂ alkenyl, -C₂ to C₁₂ alkenyl, and -C₆ aryl; optionally substituted with one or more -C₁ to C₁₂ alkyl, and/or -C₆ aryl; preferably wherein each R⁵ is independently selected from: -C₁ to C₁₂ alkyl; preferably wherein each R⁵ is independently selected from: -C₁ to C₆ alkyl; more preferably wherein each R⁵ is independently selected from: -C₁ to C₃ alkyl;
iii) or where the R⁴ and R⁵ on the same carbon atom are taken together with the carbon atom to which they are attached to form a C₄ to C₁₂ cycloalkyl group, preferably a C₄ to C₆ cycloalkyl group;
iv) most preferably R⁴ is methyl and R⁵ is isobutyl.

10. An epoxy resin curative according to any one of Claims 4 to 9, wherein L² has the formula: 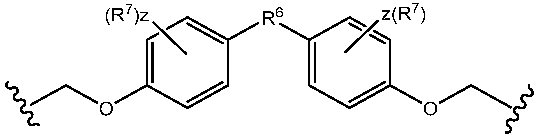 wherein:
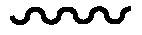 represents a point of attachment to the remainder of the molecule;
each R⁶ is independently a direct bond, a divalent group selected from: -C(O)-, -O-, -S-, - S(O)-, -S(O)₂-, or a hydrocarbyl linker comprising 1 to 50 carbon atoms;
wherein each R⁷ is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkyloxy, -C₁ to C₂₀ alkylamino, -OH, -OR², -NH₂, -NHR², -NR²₂, - C(O)OH, -C(O)OR², -C(O)NH₂, -C(O)NHR², -C(O)NR²₂, -O(CO)H, -O(CO)R², -NH(CO)H,
- NH(CO)R², -NR²(CO)H, -NR²(CO)R², -SH, -SR², -SO₂H, -SO₂R², -SO₃R², -SO₃H, - SiR²₃, -NO₂, -CN, -F, -Cl, -Br, and -I; preferably wherein R⁷ is selected from: -Me, -OH, and -OMe;
each R² is independently selected from: -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyl-C₃ to C₁₀ cycloalkyl, -C₁ to C₂₀ alkoxy, and -C₁ to C₂₀ alkylamino; and
each z is independently 0, 1, 2, 3, or 4;
preferably wherein each R⁶ independently has the formula -CR⁸₂- wherein each R⁸ is independently selected from hydrogen, a -C₁ to C₁₂ alkyl group, a halogen, a -C₁ to C₁₂ haloalkyl group, a phenyl group, and a -C₁ to C₁₂ cycloalkyl group, or wherein both R⁸ groups are taken together with the carbon to which they are attached to form a -C₁ to C₁₂ cycloalkyl group; preferably wherein each R⁸ is independently selected from: hydrogen, a -C₁ to C₆ alkyl group, a phenyl group and a halogen; and more preferably wherein each R⁸ is methyl.

11. An epoxy resin curative according to any one of Claims 4 to 10, wherein L¹ is selected from: -C₂ to C₁₅ alkyl-, -C₂ to C₁₅ alkenyl-, -C₂ to C₁₅ alkynyl-, -C₆ to C₁₀ aryl-, -C₃ to C₁₅ cycloalkyl-, and a -C₂ to C₁₅- group consisting of a combination of alkyl, cycloalkyl and/or aryl sections; and optionally comprising from 1 to 5 amine groups; preferably wherein L¹ is selected from: -C₂ to C₁₂ alkyl- optionally comprising from 1 to 5 amine groups; for example, -(CH₂)₂-, -(CH₂)₅-, -(CH₂)₆-, -(CH₂)₂-NH-(CH₂)₂-, or -(CH₂)₂-(NH-(CH2)2)2 to 4-.

12. An epoxy resin curative composition comprising one or more epoxy resin curative according to any one of Claims 4 to 11, and comprising less than 0.1 wt. of a compound defined by the formula H₂N-L³-NH₂, wherein the L³ group is the same as any one or more of the L¹ groups present in the epoxy resin curative of formula (1), (2a), (2b), (2c), (3), or the A-B-alternating copolymeric epoxy resin curative, as a percentage of the mass of the one or more epoxy resin curative according to any one of Claims 4 to 11, as determined by GC (gas chromatography).

13. A method for preparing a cured epoxy resin, said method comprising:
c) contacting an epoxy resin with an epoxy resin curative of any one of Claims 4 to 11, or a composition of Claim 3 or Claim 12; and
d) forming a cured epoxy resin, preferably wherein the epoxy resin is selected from epoxidized novolacs and bisphenols (A or F) or halogenated analogues thereof.

14. A cured epoxy resin prepared, or preparable, by the method of Claim 13.

15. Use of an epoxy resin curative according to any one of Claims 4 to 11, or a composition of Claim 3 or Claim 12, for causing crosslinking in an epoxy resin.
